# EUROPÄISCHE PATENTSCHRIFT

(11) **EP 4 278 877 B1**
(45) Veröffentlichungstag und Bekanntmachung des Hinweises auf die Patenterteilung: **19.11.2025**
(21) Anmeldenummer: 23173663.8
(22) Anmeldetag: 16.05.2023
(51) Int. Cl.: A01B 73/04, A01D 34/66

(54) **LANDWIRTSCHAFTLICHES ARBEITSGERÄT ZUM ANBAUEN ODER ANHÄNGEN AN EIN ZUGFAHRZEUG UND VERFAHREN ZUM EINRICHTEN EINES STRASSENBETRIEBS EINES LANDWIRTSCHAFTLICHEN ARBEITSGERÄTS**
AGRICULTURAL IMPLEMENT FOR MOUNTING OR HITCHING TO A TRACTOR AND METHOD OF SETTING UP A ROAD OPERATION OF AN AGRICULTURAL IMPLEMENT
OUTIL AGRICOLE POUR MONTER OU ATTELER À UN VÉHICULE TRACTEUR ET PROCÉDÉ POUR INSTALLER UNE UTILISATION ROUTIÈRE D'UN OUTIL AGRICOLE

(30) Priorität: 19.05.2022 DE 102022112568
(43) Veröffentlichungstag der Anmeldung: 22.11.2023
(73) Patentinhaber: Maschinenfabrik Bernard Krone GmbH & Co. KG, 48480 Spelle (DE)
(72) Erfinder: BARTELS, MARKUS, 49716 Meppen (DE); BÜTER, RICHARD, 49751 Sögel (DE); LÖMKER, Jens, 48496 Hopsten (DE)

(56) Entgegenhaltungen:
- EP-A1- 0 517 632
- EP-A1- 1 665 922
- EP-A1- 3 266 292
- WO-A1-2011/112080

## Beschreibung

Die vorliegende Erfindung betrifft ein landwirtschaftliches Arbeitsgerät, insbesondere ein Mähwerk, zum Anbau an ein Zugfahrzeug, umfassend
- einen Anbaurahmen, an dem ein teleskopierbarer Tragarm verschwenkbar und/oder verschiebbar angeordnet ist,
- wenigstens ein an den Tragarm angelenktes Aggregat,
- ein Getriebe, das leistungsempfangend an eine Zapfwelle des Zugfahrzeugs anschließbar ist, und
- eine längenveränderbare Ausgangswelle, die leistungsübertragend zwischen dem Getriebe und dem Aggregat angeordnet ist,
wobei das Aggregat durch Verschwenken und/oder Verschieben des Tragarms positionsveränderbar ist, und reversibel von einer für den Feldbetrieb vorgesehenen Feldanordnung, in der der Tragarm in eine etwa bodenparallele Flachstellung verschwenkt ist, und reversibel von einer eingezogenen Schiebestellung in eine ausgezogenen Schiebestellung teleskopierbar ist, in eine für den Straßenbetrieb vorgesehene Transportanordnung verstellbar ist, in der der Tragarm in eine gegenüber der Flachstellung aufgerichtete Klappstellung verschwenkt ist, und in die eingezogene Schiebestellung verschoben ist, wobei das Getriebe von einer Grundposition, in der es mit dem Aggregat antriebsverbindbar oder antriebsverbunden ist, zum Einrichten des Straßenbetriebs in eine Verschiebeposition verstellbar ist. Die Erfindung betrifft weiterhin ein Verfahren zum Einrichten eines Straßenbetriebs eines landwirtschaftlichen Arbeitsgeräts.

In der Landwirtschaft werden Maschinen und Geräte mit immer größeren Arbeitsbreiten verwendet, um dem stetig steigenden Anspruch nach höherer Leistung und wirtschaftlichem Ertrag zu genügen. Dies betrifft vor allem Vorsatz- oder Anbaugeräte sowie gezogene Arbeitsmaschinen wie beispielsweise Mähwerke oder Heuwerbungsmaschinen, die an eine selbstfahrende landwirtschaftliche Arbeitsmaschine wie beispielsweise einen Schlepper, einen Häcksler oder ähnlich angebaut oder von diesem gezogen sind, und die über eine Antriebs- oder Zapfwelle mit diesem antriebsverbunden sind. Um einen Straßentransport solcher Maschinen und Geräte zu ermöglichen, sind diese regelmäßig von einer für den Feldeinsatz vorgesehen Arbeitsstellung, in der sie eine große Arbeitsbreite einnehmen können, in eine kompakte Transportstellung überführbar, in der sie in Bezug auf ihre Ausmaße die gesetzlichen Anforderungen zur Teilnahme am Straßenverkehr erfüllen. Überführungsmechanismen dafür erfordern beim Schwenken und/oder Schieben regelmäßig einen Längenausgleich im Antriebsstrang. Daher werden oftmals längenveränderbare Gelenkwellen zum Antreiben der Aggregate eingesetzt. Anzustreben ist dabei, dass die Gelenkwellen eine sehr hohe Verstellbarkeit aufweisen, um einerseits in der Transportstellung möglichst kompakte Ausmaße, und andererseits im Feldbetrieb eine große Arbeitsbreite zu ermöglichen. Zudem ist der maximale Verstellweg von Gelenkwellen im Verhältnis zu ihrer Gesamtlänge begrenzt. In Bezug auf die Teleskopierbarkeit der Gelenkwellen wirkt sich ein umso größeres Verhältnis von maximaler zu minimaler Länge jedoch umso nachteiliger auf die Kosten und die Robustheit der Gelenkwellen aus. Die Arbeitsbreite der Maschinen und Geräte ist daher in technischer und wirtschaftlicher Hinsicht durch die Verstellbarkeit der Gelenkwellen begrenzt. Um diesen Anforderungen zu genügen, werden bereits oftmals dreifach teleskopierbare Gelenkwellen genutzt. Diese sind jedoch verhältnismäßig teuer.

Die Druckschrift WO 2011/112080 A1 offenbart eine Heuwerbungsmaschine, bei der an einem Haupttragbalken Seitenarme befestigt sind, die jeweils wenigstens ein Ernteverarbeitungswerkzeug tragen. Die Seitenarme sind gelenkig mit einem Gleitlager verbunden, das entlang des Haupttragbalkens verschiebbar ist, so dass die Seitenarme reversibel von einer Arbeitsstellung in eine Transportstellung überführt werden können. Zum Antrieb der Ernteverarbeitungswerkzeuge weist die Heuwerbungsmaschine ein Verteilergetriebe auf, an das ausgangsseitig zweite teleskopierbare Antriebswellen angeschlossen sind. Das Verteilergetriebe ist auf einem Schlitten entlang von Tragschienen verschiebbar befestigt. Beim Überführen der Seitenarme von der Arbeitsstellung in die Transportstellung werden der Schlitten und das Gleitlager wenigstens bereichsweise miteinander gekoppelt verschoben.

Durch das Verschieben des Verteilergetriebes ist der erforderliche Längenausgleich der Antriebswellen beim Überführen der Seitenarme von der Arbeitsstellung in eine Transportstellung verringert.

Die Druckschrift DE 10 2018 118 971 A1 offenbart ein landwirtschaftliches Anbaugerät mit einem Verteilergetriebe, das ausgangsseitig Ausgangswellen umfasst, an die Gelenkwellen zum Antreiben von Arbeitsaggregaten angeordnet sind. Durch eine spitzwinklige Anordnung der Ausgangswellen relativ zu einer aufrechten Längsmittelebene des Anbaugeräts erstrecken sich die Gelenkwellen nicht parallel zu den die Arbeitsaggregate tragenden Tragarmen, sondern spitzwinklig gespreizt zu diesen. Dadurch ergeben sich beim Verschwenken der Tragarme kleinere Knickwinkel, und beim Teleskopieren oder Längsverschieben der Tragarme verringerte Schiebewege, die sich in verringerte Längenänderungen der Gelenkwellen niederschlagen.

Aufgabe der vorliegenden Erfindung ist es, ein landwirtschaftliches Arbeitsgerät mit einer gegenüber dem Stand der Technik noch größeren Arbeitsbreite zu schaffen, welches mit kostengünstigen technischen Mitteln betriebssicher von einer Arbeitsstellung, in der seine Arbeitsbreite, insbesondere reversibel von minimal zu maximal, einstellbar ist, in eine Transportstellung überführbar ist, in der es die Anforderungen für den Straßenbetrieb erfüllt, wobei das landwirtschaftliche Arbeitsgerät zudem für den Fahrer sehr einfach bedienbar ist.

Die Aufgabe wird gelöst mit einem landwirtschaftlichen Arbeitsgerät mit den Merkmalen des unabhängigen Patentanspruchs 1, sowie mit einem Verfahren mit den Merkmalen des unabhängigen Patentanspruchs 13. Vorteilhafte Ausführungsformen sind den abhängigen Ansprüchen entnehmbar.

Dafür wird ein landwirtschaftliches Arbeitsgerät zum Anbau an ein Zugfahrzeug geschaffen. Als Zugfahrzeug kann beispielsweise ein Traktor oder Schlepper genutzt werden, oder eine selbstfahrende Erntemaschine wie beispielsweise ein Häcksler oder dergleichen. Das landwirtschaftliche Arbeitsgerät kann ein gezogenes Arbeitsgerät sein. Weiterhin kann es zum frontseitigen oder heckseitigen Anbau an das Zugfahrzeug vorgesehen sein. In einer bevorzugten Ausführungsform ist das landwirtschaftliche Arbeitsgerät eine Mähmaschine oder eine Heuwerbungsmaschine.

Das Arbeitsgerät weist einen Anbaurahmen auf, an dem ein teleskopierbarer Tragarm verschwenkbar und/oder verschiebbar angeordnet ist. An den Tragarm ist wenigstens ein Aggregat angelenkt. Weiterhin weist das Arbeitsgerät ein Getriebe auf, das leistungsempfangend an eine Zapfwelle des Zugfahrzeugs anschließbar ist. Zwischen dem Getriebe und dem Aggregat ist zudem eine längenveränderbare Ausgangswelle leistungsübertragend angeordnet. Über die Ausgangswelle ist das Aggregat daher antreibbar.

Das Aggregat ist zum Ernten und/oder Verarbeiten von Erntegut vorgesehen. In der Ausführungsform als Mähmaschine weist es Mähscheiben auf oder einen Mähbalken, an dem eine Vielzahl über eine Arbeitsbreite des Aggregates verteilte Messer angeordnet sind. In der Ausführungsform als Heuwerbungsmaschine weist das Aggregat wenigstens einen Rechen auf, an dem Zinken angeordnet sind.

Das Aggregat ist durch Verschwenken und/oder Verschieben des Tragarms positionsveränderbar. Dadurch ist es reversibel von einer für den Feldbetrieb vorgesehenen Feldanordnung, in der der Tragarm in eine etwa bodenparallele Flachstellung verschwenkt ist, und reversibel von einer eingezogenen Schiebestellung in eine ausgezogenen Schiebestellung teleskopierbar ist, in eine für den Straßenbetrieb vorgesehene Transportanordnung verstellbar, in der der Tragarm in eine gegenüber der Flachstellung aufgerichtete Klappstellung verschwenkt ist, und in die eingezogene Schiebestellung verschoben ist. Die Stellung des Tragarms, insbesondere ein Betrag, um den der Tragarm ausgehend von der eingezogenen Schiebestellung teleskopiert ist, sowie ein Schwenkwinkel, um den der Tragarm ausgehend von der etwa bodenparallelen Flachstellung verschwenkt ist, definiert daher die Position des Aggregats.

In der Transportanordnung, bei der das Aggregat in der aufgerichteten Klappstellung angeordnet ist, erstreckt sich der Tragarm in ebenem Gelände in eine vertikale Hochrichtung oder in einem (kleinen) spitzen Winkel dazu, wobei der Winkel vorzugsweise nicht größer als 50° ist, besonders bevorzugt nicht größer als 35°.

Das Aggregat überschreitet in der Transportanordnung, bei der der Tragarm in die eingezogene Schiebestellung verstellt ist, eine im Straßenverkehr zulässige Höhe, insbesondere von 3m, nicht. Bei einer besonders großen Arbeitsbreite muss der Tragarm dafür gegenüber der ausgezogenen Schiebestellung, in der das Arbeitsgerät seine maximale Arbeitsbreite einnimmt, wenigstens teilweise oder sogar vollständig in die eingezogene Schiebestellung, in der die Arbeitsbreite minimal ist, verschoben sein.

Das Getriebe ist von einer Grundposition, in der es mit dem Aggregat antriebsverbindbar oder antriebsverbunden ist, zum Einstellen des Straßenbetriebs in eine Verschiebeposition verstellbar. Durch das Verschieben des Getriebes wird auch bei sehr langem Tragarm, das heißt sehr großer Arbeitsbreite, ein optimiertes Verhältnis von einer maximalen zu einer minimalen Länge der Ausgangswelle bei zudem optimierten Kosten und optimierter Robustheit der Ausgangswelle erreicht.

Das Arbeitsgerät zeichnet sich dadurch aus, dass eine Steuereinrichtung vorgesehen ist, welche dazu eingerichtet ist, dass beim Überführen des Aggregates von der Feldanordnung in die Transportanordnung das Teleskopieren und/oder Verschwenken des Tragarms und das Verstellen des Getriebes von der Grundposition in die Verschiebeposition in Abhängigkeit von aktuellen Stellungen des Tragarms und einer aktuellen Position des Getriebes in unterschiedlichen Reihenfolgen erfolgt. In Abhängigkeit davon, in welcher aktuellen Stellung sich der Tragarm befindet, das heißt insbesondere Flachstellung oder Klappstellung oder eine Zwischenstellung zwischen der Flachstellung und der Klappstellung und/oder eingezogene Stellung oder ausgezogene Stellung oder eine Zwischenstellung zwischen der eingezogenen und der ausgezogenen Stellung, beispielsweise eine Vorgewendestellung, und/oder in Abhängigkeit davon, in welcher aktuellen Position sich das Getriebe befindet, das heißt insbesondere Grundposition oder Verschiebeposition oder gegebenenfalls eine Zwischenposition zwischen der Grund- und der Verschiebeposition, werden der Tragarm und/oder das Getriebe in einer anderen Reihenfolge verstellt. Zum Einstellen des Straßenbetriebs kann das Teleskopieren und/oder Verschwenken des Tragarms und/oder das Verschieben des Getriebes dafür nacheinander und/oder zumindest teilweise gleichzeitig oder synchron erfolgen.

Trotz der Komplexität der erforderlichen Bewegungsabläufe und/oder der Vielzahl der erforderlichen Verstellvorgänge, die beim Überführen des Aggregats von der Feldanordnung in die Transportanordnung zu bedienen sind, kann das Aggregat sowohl ausgehend von der eingezogenen als auch ausgehend von der ausgezogenen Schiebestellung dadurch betriebssicher und/oder für den Fahrer sehr einfach von der Feldanordnung in die Transportanordnung überführt werden.

Das Arbeitsgerät weist dafür eine Steuerungseinrichtung auf, die dazu eingerichtet ist, das Verstellen des Tragarms und des Getriebes zu steuern. Die Steuerung kann prinzipiell vollständig mechanisch erfolgen, wobei als Steuerungseinrichtung zum Steuern beispielsweise eine Lenkeranordnung oder mehrere Lenkeranordnungen genutzt wird oder werden. Alternativ oder zusätzlich ist es jedoch bevorzugt, dass die Steuerung zumindest zeitweise oder bereichsweise elektrisch erfolgt. Dabei ist es besonders bevorzugt, dass das Verstellen des Aggregates von der Feldanordnung in die Transportanordnung vollständig automatisiert durchgeführt wird.

Bevorzugt weist das landwirtschaftliche Arbeitsgerät zum Klappen des Tragarms, zum Teleskopieren des Tragarms und/oder zum Verschieben des Getriebes jeweils wenigstens einen Aktor auf, insbesondere einen Linearaktor, wobei die Steuerungseinrichtung dazu eingerichtet ist, die Aktoren zu verstellen. Die Steuerungseinrichtung umfasst dafür bevorzugt eine elektrische Steuerungseinheit, insbesondere einen Controller. Als Aktoren sind dafür beispielsweise Motoren, insbesondere Linearmotoren, Hydraulikzylinder oder elektrohydraulische Zylinder verwendbar. Die Aktoren können zum Klappen des Tragarms, zum Teleskopieren des Tragarms und/oder zum Verschieben des Getriebes entweder unabhängig voneinander betätigbar sein, oder zum gleichzeitigen Betätigen zumindest teilweise miteinander verschaltet sein. Sie ermöglichen ein Verstellen des Aggregates und/oder des Getriebes gegenüber dem Anbaurahmen.

In einer besonders bevorzugten Ausführungsform, die die Aufgabe ebenfalls löst, weist die Steuerungseinrichtung wenigstens ein Messmittel auf, das dazu eingerichtet ist, die aktuelle Stellung des Tragarms und/oder die aktuelle Position des Getriebes zu erfassen. Vorzugsweise umfasst das Arbeitsgerät jeweils wenigstens ein Messmittel zum Erfassen eines Drehwinkels des Tragarms gegenüber der Flachstellung oder gegenüber der aufgerichteten Klappstellung, und zum Erfassen einer Länge des Tragarms gegenüber der eingezogenen Schiebestellung, um die aktuelle Stellung des Tragarms zu ermitteln, sowie ein Messmittel zum Erfassen der Verschiebeposition des Getriebes gegenüber der Grundposition. Als Messmittel kommen dabei bevorzugt herkömmliche Sensoren zum Einsatz. Die Steuerungseinrichtung ist bevorzugt dazu eingerichtet, die mit den Sensoren gemessenen Messwerte zu erfassen und die Aktoren in Abhängigkeit von den Messwerten anzusteuern.

In dieser Ausführungsform ist die Steuerungseinrichtung dazu eingerichtet, das Verstellen des Aggregates von der Feldanordnung in die Transportanordnung, und/oder des Getriebes von der Grundposition in die Verschiebeposition in Abhängigkeit von den erfassten Stellungen und/oder Positionen durchzuführen. Da die Steuerungseinrichtung dazu eingerichtet ist, das Verstellen des Aggregats und/oder des Getriebes in Abhängigkeit von den erfassten Stellungen und/oder Position durchzuführen, kann sie die Verstellvorgänge des Tragarms und/oder des Getriebes kontrolliert und/oder überwacht durchführen. Insbesondere kann dadurch sichergestellt werden, dass die Ausgangswelle beim Teleskopieren aufgrund der Verstellvorgänge des Aggregats und/oder des Getriebes nicht in unzulässiger Weise gestaucht oder verlängert wird. Eine Beschädigung der Ausgangswelle wird dadurch zuverlässig vermieden. Auch bei dieser Ausführungsform kann das Aggregat daher trotz der großen erreichbaren Arbeitsbreite des Arbeitsgerätes und der damit verbundenen Komplexität der erforderlichen Bewegungsabläufe und/oder der Vielzahl der erforderlichen Verstellvorgänge sowohl ausgehend von der eingezogenen als auch ausgehend von der ausgezogenen Schiebestellung betriebssicher und/oder für den Fahrer sehr einfach von der Feldanordnung in die Transportanordnung überführt werden. Dabei ist eine vollständige Automatisierung der Verstellvorgänge bevorzugt.

Vorzugsweise ist der Tragarm dafür bei überwiegend eingezogener Schiebestellung erst dann in die aufgerichtete Klappstellung klappbar, und/oder bei überwiegend aufgerichteter Klappstellung erst dann in die eingezogene Schiebestellung einziehbar, wenn das Getriebe in die Verschiebeposition verschoben ist. Der Begriff "überwiegend" bedeutet hier, dass der Tragarm bei überwiegend eingezogener Schiebestellung eine Länge aufweist, die kleiner als oder gleich einer Grenzlänge ist, und/oder, dass der Tragarm bei überwiegend aufgerichteter Klappstellung einen Schwenkwinkel aufweist, der größer als eine Grenzwinkel ist. Dabei ist der Grenzwinkel der Schwenkwinkel, den der Tragarm gegenüber der Flachstellung einnimmt.

Durch das Verschieben des Getriebes von der Grundposition in die Verschiebeposition wird die Ausgangswelle verlängert, bevor sie durch das Verschwenken und/oder Verschieben des Tragarms reduziert oder kompensiert wird. Dadurch ist sichergestellt, dass die Ausgangswelle beim Klappen und/oder Einziehen des Tragarms nicht durch unzulässige Verlängerung oder Stauchung beschädigt wird. Weiterhin wird dadurch sichergestellt, dass beim Einrichten des Straßenbetriebs eine Mindestlänge der Ausgangswelle nicht unterschritten wird. Infolgedessen kann die Ausgangswelle konstruktiv mit einer hohen Mindestlänge ausgelegt werden. Dadurch kann eine hohe Maximallänge der Ausgangswelle und somit eine sehr hohe Arbeitsbreite des Arbeitsgeräts, insbesondere auch über eine herkömmliche Arbeitsbreite hinaus, realisiert werden. Dabei ist gleichzeitig eine den gesetzlichen Vorschriften entsprechende Transporthöhe und/oder Transportbreite des Arbeitsgeräts sichergestellt. Außerdem kann ein Längenverhältnis, gebildet aus der Mindestlänge und der Maximallänge der Ausgangswelle, vorteilhaft ausgelegt werden, sodass das Arbeitsgerät kostengünstig und robust realisierbar ist.

Zum Einstellen des Straßenbetriebs ist die Steuerungseinrichtung weiterhin bevorzugt dazu eingerichtet, das Getriebe
a. zuerst von der Grundposition in die Verschiebeposition zu verschieben, wenn eine Länge des Tragarms kleiner als die oder gleich der Grenzlänge ist,
   insbesondere der Tragarm in die eingezogene Schiebestellung verschoben ist, oder
b. zuerst von der Grundposition in die Verschiebeposition zu verschieben, wenn die Länge des Tragarms größer als die Grenzlänge ist und ein Schwenkwinkel des Tragarms gegenüber der Flachstellung größer als ein Grenzwinkel ist, insbesondere der Tragarm in die aufgerichtete Klappstellung verschwenkt ist, oder
c. von der Grundposition in die Verschiebeposition zu verschieben, während der Tragarm, insbesondere von der Flachstellung ausgehend, in die aufgerichtete Klappstellung verschwenkt wird, wenn die Länge des Tragarms größer als die Grenzlänge ist, und der Schwenkwinkel des Tragarms kleiner als die oder gleich dem Grenzwinkel ist.

Indem die Grenzlänge für die Länge des Tragarms und/oder der Grenzwinkel für den Schwenkwinkel des Tragarms optimiert eingestellt werden, kann das Einrichten des Straßenbetriebes bezüglich der aufzuwenden Zeit und/oder der Betriebssicherheit optimiert werden. Durch Verschieben des Getriebes von der Grundposition in die Verschiebeposition während des Verschwenkens des Tragarms in die aufgerichtete Klappstellung ist das Einrichten des Straßenbetriebs sehr schnell möglich. Dabei ist es besonders bevorzugt, dass sich das Getriebe in der Verschiebeposition befindet, wenn der Tragarm von einer Schiebestellung, in der er noch zumindest teilweise ausgezogen ist, in die eingezogene Schibestellung teleskopiert wird.

Die Steuerungseinrichtung ist bevorzugt weiterhin dazu eingerichtet, das Getriebe von einem Betriebs- in einen Außerbetriebsmodus zu schalten. Im Außerbetriebsmodus sind die Antriebswelle und die Abtriebswelle oder -Wellen des Getriebes mechanisch voneinander entkoppelt. Dadurch ist das Aggregat im Betriebsmodus trieblich mit der Zapfwelle verbunden, während es im Außerbetriebsmodus trieblich von der Zapfwelle getrennt ist. Im Außerbetriebsmodus wird das Aggregat daher nicht angetrieben.

Vorzugsweise erfolgt das Schalten vom Betriebs- in den Außerbetriebsmodus durch manuelle Einstellung des Fahrers, beispielsweise mittels eines Knopfes. Außerdem kann der Außerbetriebsmodus automatisch beim Einrichten des Straßenbetriebs von der Steuerungseinrichtung einschaltbar sein. Es ist dann bevorzugt, dass das Schalten vom Betriebs- in den Außerbetriebsmodus erfolgt, wenn der Tragarm gegenüber der Flachstellung in eine Zwischenstellung, insbesondere in eine Vorgewendestellung oder höher, geklappt ist. Dabei kann für das Einrichten des Straßenbetriebs ebenfalls auf einen Knopfdruck des Fahrers erfolgen. Dabei ist es besonders bevorzugt, dass die Steuerungseinrichtung dazu eingerichtet ist, das Einstellen des Straßenbetriebs nur im Außerbetriebsmodus durchzuführen. Dadurch wird eine Gefährdung von Personen, die sich in der Nähe des Arbeitsgerätes aufhalten, vermieden.

Das Arbeitsgerät weist weiterhin bevorzugt eine teleskopierbare Eingangswelle auf, die zwischen dem Getriebe und der Zapfwelle des Zugfahrzeugs angeordnet ist. Die Eingangswelle ist vorzugsweise mittels Kardangelenken an das Getriebe angeschlossen. Alternativ oder zusätzlich kann das Arbeitsgerät eine Trennkupplung aufweisen, die in der Grundposition des Getriebes die Zapfwelle mit dem Getriebe verbindet, und in der Verschiebeposition des Getriebes die Zapfwelle von dem Getriebe trennt. Dadurch kann das Schalten in den Außerbetriebsmodus mechanisch erfolgen. In einer vorteilhaften Ausführungsform kann die Trennkupplung zwischen der Eingangswelle und dem Getriebe angeordnet sein.

Ebenfalls bevorzugt weist der Anbaurahmen ein Führungsmittel zum reversiblen Verschieben des Getriebes auf, das sich in Verschieberichtung, insbesondere in eine Fahrtrichtung, erstreckt. Das Getriebe ist entlang des Führungsmittels hin und zurück verschiebbar. Dadurch kann das Verschieben des Getriebes betriebssicher erfolgen. Als Führungsmittel sind beispielsweise eine oder mehrere Streben oder Schienen verwendbar. Dabei kann sich das Getriebe entlang oder mit diesen verschieben. Prinzipiell ist es auch denkbar, dass das Getriebe verschwenkt, oder verschwenkt und verschoben wird.

In einer bevorzugten Ausführungsform weist das Arbeitsgerät zwei Aggregate auf. Diese sind vorzugsweise beidseitig des Anbaurahmens angeordnet. Für jedes der Aggregate weist das Arbeitsgerät eine Ausgangswelle auf, die leistungsübertragend zwischen dem Getriebe und dem Aggregat angeordnet ist. Die beiden Aggregate sind bevorzugt gegenüber einer Mittelebene, die durch sich in eine Fahrtrichtung erstreckende Linie und eine sich in eine Hochrichtung erstreckende Linie aufgespannt ist, spiegelbildlich angeordnet. Dadurch ist das Getriebe im Wesentlichen mittig zwischen den beiden Aggregaten angeordnet. Es können dann baugleiche Ausgangswellen genutzt werden.

In einer ersten bevorzugten Ausführungsform können die Aggregate unabhängig voneinander verstellt werden. Dadurch kann beispielsweise ein Aggregat in Klappstellung angeordnet sein, während das andere sich in Flachstellung befindet. Es ist aber besonders bevorzugt, dass die Steuerungseinrichtung wenigstens zusätzlich dazu eingerichtet ist, zum Einstellen des Straßenbetriebs die Position beider Aggregate simultan zu verändern.

Die Aufgabe wird weiterhin gelöst mit einem Verfahren zum Einrichten eines Straßenbetriebs eines landwirtschaftlichen Arbeitsgeräts, insbesondere eines solchen landwirtschaftlichen Arbeitsgeräts, bei dem eine Position eines Aggregats, das über einen teleskopierbaren Tragarm an das Arbeitsgerät angelenkt ist, durch Verschwenken und/oder Verschieben des Tragarms verändert wird, so dass das Aggregat reversibel von einer für den Feldbetrieb vorgesehenen Feldanordnung, in der der Tragarm in eine etwa bodenparallele Flachstellung verschwenkt und reversibel von einer eingezogenen Schiebestellung in eine ausgezogenen Schiebestellung teleskopierbar ist, in eine für den Straßenbetrieb vorgesehene Transportanordnung, in der der Tragarm in eine gegenüber der Flachstellung aufgerichtete Klappstellung verschwenkt und in die eingezogene Schiebestellung überführt ist, verstellt wird, wobei beim Überführen des Aggregates von der Feldanordnung in die Transportanordnung das Teleskopieren und/oder Verschwenken des Tragarms und/oder das Verschieben des Getriebes in Abhängigkeit von aktuellen Stellungen des Tragarms und/oder aktuellen Positionen des Getriebes in unterschiedlichen Reihenfolgen erfolgt. In Abhängigkeit davon, in welcher aktuellen Stellung sich der Tragarm befindet, das heißt insbesondere Flachstellung oder Klappstellung oder eine Zwischenstellung zwischen der Flachstellung und der Klappstellung und/oder eingezogene Stellung oder ausgezogene Stellung oder eine Zwischenstellung zwischen der eingezogenen und der ausgezogenen Stellung, beispielsweise eine Vorgewendestellung, und/oder in Abhängigkeit davon, in welcher aktuellen Position sich das Getriebe befindet, das heißt insbesondere Grundposition oder Verschiebeposition oder gegebenenfalls eine Zwischenposition zwischen der Grund- und der Verschiebeposition, werden der Tragarm und/oder das Getriebe in einer anderen Reihenfolge verstellt. Zum Einstellen des Straßenbetriebs kann das Teleskopieren und/oder Verschwenken des Tragarms und/oder das Verschieben des Getriebes dafür zumindest teilweise nacheinander und/oder zumindest teilweise gleichzeitig oder synchron erfolgen.

Trotz der Komplexität der erforderlichen Bewegungsabläufe und/oder der Vielzahl der erforderlichen Verstellvorgänge, die beim Überführen des Aggregats von der Feldanordnung in die Transportanordnung durchzuführen sind, kann das Aggregat sowohl ausgehend von der eingezogenen als auch ausgehend von der ausgezogenen Schiebestellung dadurch betriebssicher und/oder für den Fahrer sehr einfach von der Feldanordnung in die Transportanordnung überführt werden.

In einer bevorzugten Ausführungsform, die die Aufgabe ebenfalls löst, umfasst das Arbeitsgerät eine elektrische Steuerungseinrichtung, wobei das Verfahren die Schritte umfasst:
- Verschieben des Getriebes von einer Grundposition, in der es mit dem Aggregat antriebsverbindbar oder antriebsverbunden ist, in eine Verschiebeposition, und
- Erfassen einer aktuellen Position des Aggregates und einer aktuellen Position des Getriebes,
wobei das Verstellen des Aggregates von der Feldanordnung in die Transportanordnung, und/oder des Getriebes von der Grundposition in die Verschiebeposition in Abhängigkeit von den erfassten Stellungen des Tragarms und/oder Positionen des Getriebes durchgeführt wird. Da das Verstellen des Aggregats und/oder des Getriebes in Abhängigkeit von den erfassten Stellungen und/oder Positionen erfolgt, können die Verstellvorgänge des Aggregats und/oder des Getriebes automatisch und kontrolliert durchgeführt werden. Sich aufgrund der Verstellung des Aggregats und/oder des Getriebes einstellende Verkürzungen oder Verlängerungen der Ausgangswelle können dabei zumindest teilweise ausgeglichen werden, insbesondere um unzulässige Stauchungen und/oder Verlängerungen der Ausgangswelle zu vermeiden.

In einer bevorzugten Ausführungsform wird der Tragarm bei überwiegend eingezogener Schiebestellung erst dann in die aufgerichtete Klappstellung geklappt, und/oder bei überwiegend aufgerichteter Klappstellung erst dann in die eingezogene Schiebestellung eingezogen, wenn das Getriebe in die Verschiebeposition verschoben ist. Durch das Verschieben des Getriebes von der Grundposition in die Verschiebeposition wird die Ausgangswelle verlängert, bevor sie durch das Verschwenken und/oder Verschieben des Tragarms reduziert wird. Dadurch ist sichergestellt, dass die Ausgangswelle beim Klappen und/oder Einziehen des Tragarms nicht durch unzulässige Verlängerung oder Stauchung beschädigt wird.

Bevorzugt erfolgt das Teleskopieren und/oder Klappen des Tragarms und/oder das Verschieben des Getriebes in einer Reihenfolge, insbesondere nacheinander und/oder zumindest teilweise gleichzeitig, die abhängig von den erfassten Stellungen und/oder Positionen ist. Insbesondere kann dadurch die Reihenfolge, in der das Teleskopieren und/oder Klappen des Tragarms und/oder das Verschieben des Getriebes erfolgt, optimiert werden. Durch Wahl der Reihenfolge wird ein nicht nur sehr schneller sondern zudem sehr zuverlässiger, das heißt betriebssicherer, Wechsel vom Feldbetrieb in den Straßenbetrieb ermöglicht.

Das Verfahren stellt sicher, dass beim Einrichten des Straßenbetriebs eine Mindestlänge der Ausgangswelle nicht unterschritten und/oder eine Maximallänge der Ausgangswelle nicht überschritten wird. Infolgedessen kann die Ausgangswelle mit einem für die Robustheit und für die Beschaffungskosten günstigen Verhältnis aus Mindestlänge und Maximallänge konstruktiv ausgelegt werden. Das Verfahren ermöglicht es daher, eine sehr hohe Arbeitsbreite mit kostengünstigen technischen Mitteln zu realisieren.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch eine Ausführungsform eines erfindungsgemäßen und für den Feldbetrieb eingerichteten Arbeitsgeräts, wobei in (a) das Arbeitsgerät in einer perspektivischen Ansicht, in (b) ein Antriebsstrang des Arbeitsgeräts in einer herausgelösten perspektivischen Ansicht, und in (c) ein Ausschnitt aus einer Unterseite des Arbeitsgeräts in einer perspektivischen Ansicht dargestellt ist;
- Fig. 2: schematisch das Arbeitsgerät der Fig. 1, wobei ein Aggregat und/oder ein Getriebe in den Fig. 2 (a) - (c) in verschiedenen Stellungen und/oder Positionen dargestellt sind;
- Fig. 3: schematisch das für den Straßenbetrieb eingerichtete Arbeitsgerät der Fig. 1, wobei in (a) ein Ausschnitt aus dem Arbeitsgerät in einer perspektivischen Ansicht, in (b) ein Antriebsstrang des Arbeitsgeräts in einer herausgelösten perspektivischen Ansicht, und in (c) ein Ausschnitt aus einer Unterseite des Arbeitsgeräts in einer perspektivischen Ansicht dargestellt ist; und
- Fig. 4: einen Ausschnitt aus dem Antriebsstrang des Arbeitsgeräts der Fig. 1.

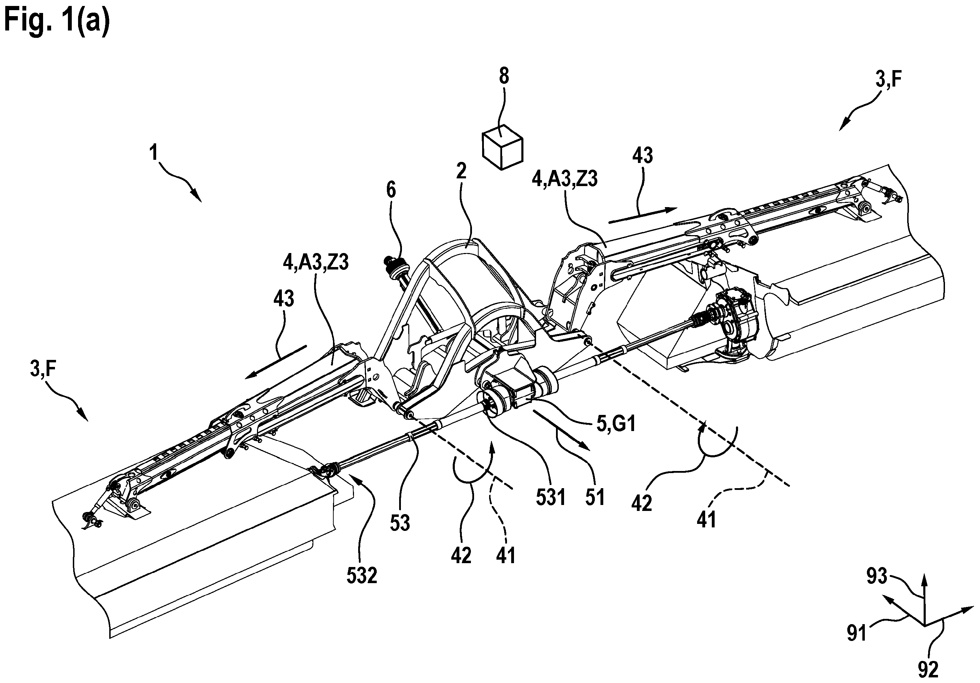

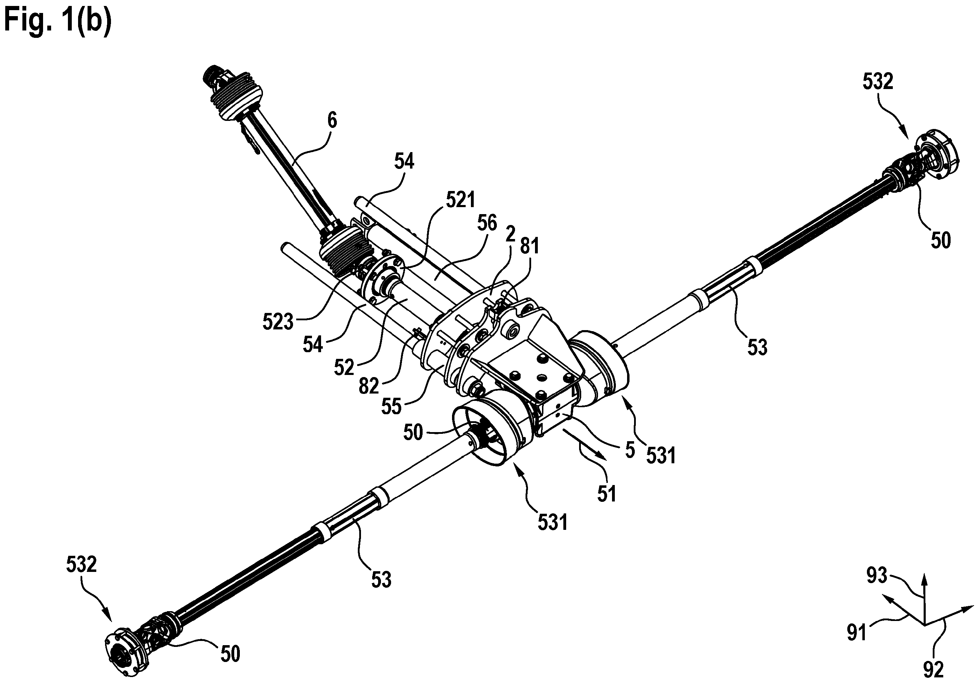

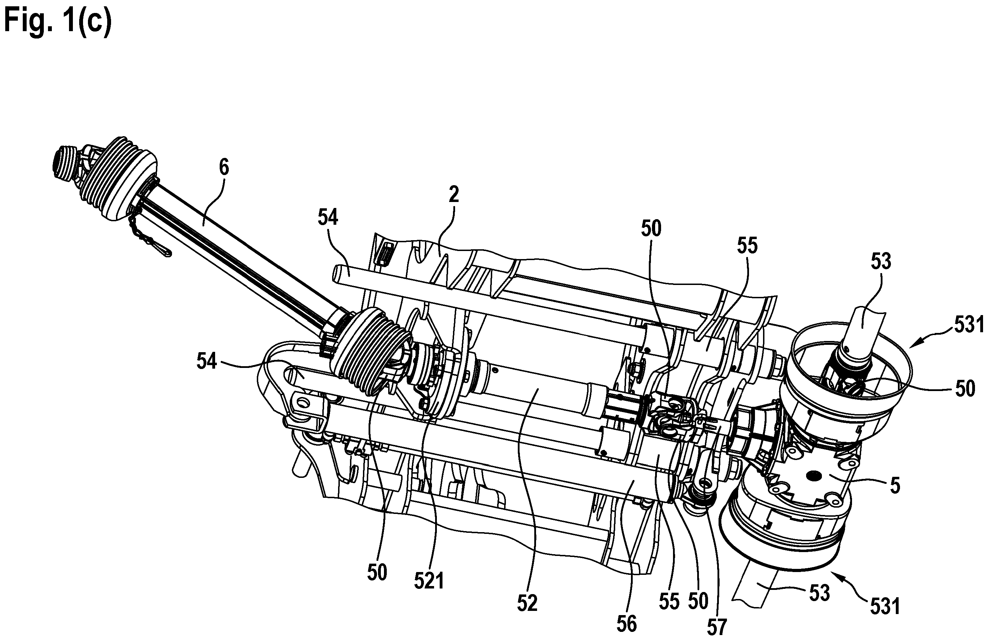

Fig. 1 zeigt ein landwirtschaftliches Arbeitsgerät 1, das hier als Mähmaschine ausgebildet ist. Im Folgenden werden daher die Begriffe Arbeitsgerät 1 und Mähmaschine synonym verwendet. Die vorliegende Erfindung ist aber auch auf andere landwirtschaftliche Arbeitsgeräte 1 anwendbar, beispielsweise auf Heuwerbungsmaschinen wie Wender oder Schwader.

Das Arbeitsgerät 1 weist einen Anbaurahmen 2 auf, der zum Anbauen an ein Zugfahrzeug (nicht dargestellt), beispielsweise einen Traktor oder Schlepper oder eine selbstfahrende Erntemaschine, wie insbesondere einen Feldhäcksler oder eine Ballenpresse, vorgesehen ist. Durch den Anbaurahmen 2 ist das Arbeitsgerät 1 an das Zugfahrzeug, insbesondere an ein Hubwerk des Zugfahrzeugs, anbaubar. Im angebauten Zustand wird es vom Zugfahrzeug getragen. Die vorliegende Erfindung ist aber auch auf andere landwirtschaftliche Arbeitsgeräte anwendbar, die vom Zugfahrzeug gezogen werden und dafür beispielsweise über eine Deichsel an dieses angekuppelt sind.

Beidseitig am Anbaurahmen 2 weist das Arbeitsgerät 1 jeweils ein Aggregat 3 auf, das an einem Tragarm 4 angebaut ist. Die beiden Aggregate 3 sind spiegelsymmetrisch zu einer Mittelebebene (nicht gezeigt) angeordnet, die durch eine sich in eine Fahrtrichtung 91 erstreckende Linie und eine sich in eine Hochrichtung 93 erstreckende Linie aufgespannt ist. Die folgenden Ausführungen gelten für beide Aggregate 3, wobei diese im Rahmen der Fig. 1 (a) zunächst anhand nur eines der Aggregate 3 beschrieben sind:
Der Tragarm 4, an dem das Aggregat 3 angeordnet ist, ist schwenkbar um eine Schwenkachse 41 am Anbaurahmen 2 angelenkt. Zudem ist der Tragarm 4 in eine Auszugsrichtung 43 längenveränderbar ausgeführt. Dazu ist er hier teleskopierbar ausgebildet, und weist, insbesondere zwei, ineinander verschiebbare Abschnitte auf.

Der Tragarm 4 ist durch Teleskopieren von einer eingezogenen Schiebestellung Z1 in eine ausgezogene Schiebestellung Z3 verschiebbar. Zudem ist er durch Verschwenken in Schwenkrichtung 42 um die Schwenkachse 41 von einer Flachstellung A3 ausgehend, in der er etwa bodenparallel angeordnet ist, in eine aufgerichtete Klappstellung A1 klappbar, in der er sich etwa in Hochrichtung 93 erstreckt, oder in einem (kleinen) spitzen Winkel zu dieser.

Der Tragarm 4 erstreckt sich in der Flachstellung A1 des Aggregats 3 im Wesentlichen in eine Längsrichtung 92, die quer zur Fahrtrichtung 91 und quer zur Hochrichtung 93 angeordnet ist. In ebenem Gelände ist er daher etwa horizontal ausgerichtet oder erstreckt sich jedenfalls nur in einem (kleinen) spitzen Winkel zur Horizontalen. Daher ist auch das Aggregat 3 in Flachstellung A3 etwa parallel zum Boden ausgerichtet.

Durch Verschwenken und/oder Teleskopieren des Tragarms 4 ist eine Position des Aggregats 3 veränderbar.

Das Aggregat 3 ist in der Fig. 1 (a) in einer für den Feldbetrieb vorgesehenen Feldanordnung F schematisch dargestellt. Der Übersicht halber ist in der Fig. 1 (a) lediglich ein Ausschnitt des Aggregates 3 gezeigt.

In der Feldanordnung F des Aggregats 3 ist der Tragarm 4 in die Flachstellung A3 verschwenkt und reversibel von der eingezogenen Schiebestellung Z1 in die ausgezogene Schiebestellung Z3 verschiebbar. Das Aggregat 3 ist dann seitlich auskragend angeordnet. Es wird in der Flachstellung A3 des Tragarms 4 zum Schneiden von Erntegut über den Boden geführt.

Beim Teleskopieren des Tragarms 4 wird das Aggregat 3 in Auszugsrichtung 43 zum Anbaurahmen 2 hin oder gegen die Auszugsrichtung 43 vom Anbaurahmen 2 weg verschoben. Durch das Teleskopieren des Tragarms 4 ist daher eine Arbeitsbreite (nicht bezeichnet) des Arbeitsgeräts 1 einstellbar.

Als ausgezogene Schiebestellung Z1 ist die Stellung bezeichnet, in der der Tragarm 4 auf eine maximale Länge teleskopiert ist. Mit eingezogene Schiebestellung Z1 ist die Stellung bezeichnet, in der der Tragarm 4 auf eine minimale Länge teleskopiert ist. Dadurch ist das Arbeitsgerät 1 in der Flachstellung A1 vorteilhaft von der minimalen Arbeitsbreite durch Teleskopieren des Tragarms 4 in die Auszugsrichtung 43 in die maximale Arbeitsbreite verstellbar, und durch Teleskopieren gegen die Auszugsrichtung zurückstellbar. Der Tragarm 4 befindet sich in Fig. 1 (a) in der ausgezogenen Schiebestellung Z3, so dass diese Figur das Arbeitsgerät 1 bei maximaler Arbeitsbreite zeigt.

Fig. 1 (b) zeigt einen Antriebsstrang des Arbeitsgeräts 1 in einer vom Anbaurahmen 2 herausgelösten Ansicht. Fig. 1 (c) zeigt einen Ausschnitt des Arbeitsgerätes 1 mit dem Antriebsstrang an einer Unterseite (nicht bezeichnet) des Anbaurahmens 2.

Das Arbeitsgerät 1 weist zum Antrieb der Aggregate 3 einen Antriebsstrang auf, der ein Getriebe 5 umfasst, das leistungsempfangend mit einer Zapfwelle (nicht dargestellt) des Zugfahrzeugs verbindbar ist. Das Getriebe 5 ist zur Leistungsübertragung an die Aggregate 3 vorgesehen und im Wesentlichen mittig zwischen den Aggregaten 3 an einer dem Zugfahrzeug abgewandten Seite (nicht bezeichnet) des Anbaurahmens 2 angeordnet.

Zum Anschließen des Antriebsstrangs an die Zapfwelle umfasst das Arbeitsgerät 1 eine Anschlusswelle 6. Eine Eingangswelle 52, die teleskopierbar ausgebildet ist, verbindet die Anschlusswelle 6 mit dem Getriebe 5. Dafür weist das Getriebe 5 eine Antriebswelle 57 auf, an die die Eingangswelle 52 angeschlossen ist. Ausgangsseitig des Getriebes 5 weist der Antriebsstrang für jedes der Aggregate 3 jeweils eine Ausgangswelle 53 auf, die an das jeweilige Aggregat 3 angeschlossen ist, so dass dieses über die Ausgangswelle 53 antreibbar ist. In der vorliegenden Ausführungsform des Arbeitsgerätes 1 weist der Antriebsstrang zwei Ausgangswellen 53 zum Antrieb der beiden Aggregate 3 auf. Um den Tragarm 4 Teleskopieren zu können, sind die Ausgangswellen 53 teleskopierbar. Die Ausgangswellen 53 erstecken sich in einer Grundposition G1 des Getriebes 5 im Wesentlichen in oder gegen die Längsrichtung 92, und daher im Wesentlichen quer zur Fahrtrichtung 91. Das Getriebe 5 ist dafür hier als T-Getriebe ausgeführt, bei dem die Ausgangswellen 53 quer zur Eingangswelle 52 am Getriebe 5 angeschlossen sind. Die Ausgangswellen 53 sind jeweils an Abtriebswellen (nicht gezeigt) des Getriebes 5 angeschlossen. Die Anschlüsse der Wellen 6, 52, 57, 53 des Antriebsstrangs sind jeweils durch Kardangelenke (nicht bezeichnet) gebildet. Die Kardangelenke sind zum Winkelausgleich zwischen den Wellen 6, 52, 57, 53 vorgesehen.

Wenn der Antriebsstrang an die Zapfwelle angeschlossen ist, werden bei Antrieb der Zapfwelle die Anschlusswelle 6 und die Eingangswelle 52 gedreht und das Getriebe 5 daher angetrieben. Dadurch drehen sich auch die Ausgangswellen 53, so dass die Aggregate 3 in einem Betriebsmodus des Getriebes 5 angetrieben sind. Das Getriebe 5 ist in einen Außerbetriebsmodus schaltbar, in der die Antriebswelle 57 und die Abtriebswellen des Getriebes 5 voneinander entkoppelt sind, so dass die Abtriebswellen bei Antrieb der Antriebswelle 57 nicht angetrieben sind. Anstelle eines solchen schaltbaren Getriebes 5 ist es zum Entkoppeln der Ausgangswellen 53 von der Zapfwelle auch bevorzugt, eine Trennkupplung (nicht gezeigt) im Antriebsstrang vorzusehen, insbesondere in Bereich der Eingangswelle 52.

Im Feldbetrieb ist das Getriebe 5 in der Grundposition G1 angeordnet, in der es zum Antreiben der Aggregate 3 vorgesehen ist. Es kann manuell reversibel vom Betriebsmodus in den Außerbetriebsmodus geschaltet werden. Zudem ist das Arbeitsgerät 1 dazu eingerichtet, das Getriebe 5 beim Hochklappen des Tragarms 4 von der Flachstellung A3 in die aufgerichtete Klappstellung A1 in den Außerbetriebsmodus zu schalten, wenn es eine Zwischenstellung A2, insbesondere eine Vorgewendestellung, überschreitet.

Um das Arbeitsgerät 1 auf der Straße transportieren zu können, sind die Aggregate 3 von der Feldanordnung F in eine Transportanordnung T verstellbar. Damit das Arbeitsgerät 1 die zulässige Breite von Fahrzeugen im Straßenverkehr nicht überschreitet, ist der Tragarm 4 in der Transportanordnung T des Aggregats 3 in die aufgerichtete Klappstellung A1 geklappt. In der ausgezogenen Schiebestellung Z3 und der aufgerichteten Klappstellung A1 des Tragarms 4 überschreitet das Arbeitsgerät 1 zudem die erlaubte Höhe von Fahrzeugen im Straßenverkehr. Damit das Arbeitsgerät 1 die zulässige Höhe nicht überschreitet, ist der Tragarm 4 in der Transportanordnung T des Aggregats 3 eingezogen. Da die Schwenkachse 41 des Tragarms 4 zu den Kardangelenken 50 der Ausgangswellen 53 versetzt angeordnet sind, muss zum Hochklappen und/oder Einziehen ein Längenausgleich der Ausgangswellen 53 erfolgen, der zu einem unzulässigen Stauchen oder Verlängern der Ausgangswellen 53 führen kann.

Um das zu verhindern, ist das Getriebe 5 zum Einrichten des Straßenbetriebs reversibel relativ zum Anbaurahmen 2 in eine Verschieberrichtung 51 in eine Verschiebeposition G2 verschiebbar. Fig. 1 (c) zeigt den Antriebsstrang mit dem geringfügig gegenüber der Grundposition G1 in Verschieberichtung 51 verschobenem Getriebe 5. In dieser Darstellung hat das Getriebe 5 daher die Verschiebeposition G2 noch nicht erreicht.

Die Eingangswelle 52 ist an ihrem dem Getriebe 5 gegenüberliegenden Ende in einem ortsfesten Lager 521 drehbar am Anbaurahmen 2 gelagert.
Beim Verschieben des Getriebes 5 von der Grundposition G1 in die Verschiebeposition G2 wird die Eingangswelle 52 durch Teleskopieren in die Verschieberichtung 51 verlängert, und beim Zurückschieben des Getriebes 5 von der Verschiebeposition G2 gegen die Verschieberichtung 51 in die Grundposition G1 verkürzt. In der Grundposition G1 ist sie bevorzugt auf ihre minimal vorgesehene Länge eingefahren und zur Leistungsübertragung über das Getriebe 5 und die Ausgangswellen 53 an die Aggregate 3 vorgesehen.

Beim Verschieben wird das Getriebe 5 durch Führungselemente 54 geführt, die sich in die Verschieberichtung 51 erstrecken. Dafür sind die Führungselemente 54 als Streben ausgeführt, die jeweils in einem Führungslager 55 verschiebbar gelagert sind. Die Führungselemente 54 sind hier am Getriebe 5, und die Führungslager 55 am Anbaurahmen 2 befestigt. Es ist aber auch eine Ausführungsform verwendbar, bei die Führungselemente 54 am Anbaurahmen 2, und die Führungslager 55 am Getriebe 5 angeordnet ist.

Zum Verschieben des Getriebes 5 ist ein Aktor 56 vorgesehen, der hier als Hydraulikzylinder ausgeführt ist. Es kann aber auch ein anderer Aktor 56 verwendet werden wie beispielsweise ein Linearmotor.

Der Aktor 56 wird von einer elektrischen Steuerungseinrichtung 8 betätigt, die im Anbaugerät 1 angeordnet ist. Prinzipiell kann aber auch eine elektrische Steuerungseinrichtung 8 des Zugfahrzeugs genutzt werden. Die elektrische Steuerungseinrichtung 8 ist auch zum Umschalten des Getriebes 5 vom Betriebsmodus in den Außerbetriebsmodus vorgesehen.

Durch das Verschieben des Getriebes 5 ändert sich ein Winkel der Ausgangswellen 53 jeweils relativ zu der Abtriebswelle des Getriebes 5, an die sie angeschlossen sind. Diese Winkeländerung ist aufgrund der Kardangelenke 50 möglich.

Um das Überführen des Arbeitsgerätes 1 vom Feldbetrieb in den Straßenbetrieb betriebssicher, schnell und für den Fahrer einfach durchführen zu können, ist die Steuerungseinrichtung 8 dazu eingerichtet, aktuelle Stellungen A1 - A3, Z1 - Z3 des Tragarms 4 und/oder eine aktuelle Position G1, G2 des Getriebes 5 zu erfassen. Weiterhin ist die Steuerungseinrichtung 8 dazu eingerichtet, das Verstellen des Tragarms 4 und/oder des Getriebes 5 zu steuern. Beim Überführen des Aggregates 3 von der Feldanordnung F in die Transportanordnung T kann dadurch das Teleskopieren und/oder Verschwenken des Tragarms 4 und/oder das Verstellen des Getriebes 5 in Abhängigkeit von den erfassten Stellungen A1, A2, A3, Z1, Z2, Z3 des Tragarms 4 und/oder der erfassten Position G1, G2 des Getriebes 5 in unterschiedlichen Reihenfolgen erfolgen. Dadurch kann einerseits ein unzulässiges Stauchen oder Verlängern der Ausgangswellen 53 vermieden werden. Das Überführen kann schnellstmöglich erfolgen und zudem automatisiert durchgeführt werden, und daher für den Fahrer so einfach wie möglich. Die Steuerungseinrichtung 8 kann aus Sicherheitsgründen für Personen, die sich im Umfeld des Arbeitsgerätes 1 aufhalten, dazu eingerichtet sein, das Einstellen des Straßenbetriebs so lange zu verhindern, bis das Getriebe 5 in den Außerbetriebsmodus geschaltet wurde.

Auch zum Verstellen des Aggregats 3 umfasst das Arbeitsgerät 1 Aktoren (nicht gezeigt), die von der Steuerungseinrichtung 8 steuerbar sind. Weiterhin weist es zum Erfassen der aktuellen Stellungen A1 - A3, Z1 - Z3 des Tragarms 4 und der Position G1, G2 des Getriebes G Sensoren 81, 82 auf.

Ein erster Sensor 81 ist dazu vorgesehen, die Grundposition G1 des Getriebes 5 zu erfassen. Dazu ist der erste Sensor 81 dem Getriebe 5 gegenüberliegend am Anbaurahmen 2 angeordnet. Er kann beispielsweise als Näherungssensor ausgebildet sein, und die Annäherung des Getriebes 5 an den Anbaurahmen 2 beispielsweise induktiv oder magnetisch erfassen. Ein zweiter Sensor 82 ist an einem der Führungslager 55 angeordnet, und zur Erfassung der Verschiebeposition G2 des Getriebes 5 vorgesehen. Auch dieser Sensor 82 kann dafür als Näherungssensor ausgebildet sein, und beispielsweise induktiv oder magnetisch erfassen, ob das Führungselement 54 in seinem Näherungsbereich angeordnet ist, oder nicht.

Die aktuelle Stellung A1, A2, Z1, Z2 des Tragarms 4 können beispielsweise anhand der Verschiebewege der jeweiligen Aktoren erfasst werden, und/oder mittels weiterer Sensoren (nicht dargestellt).

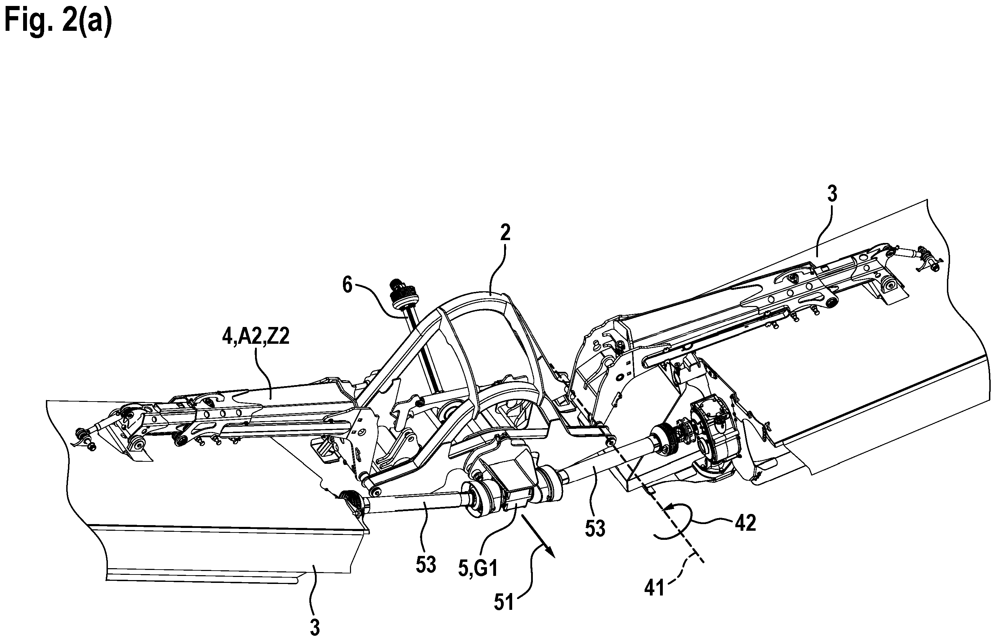

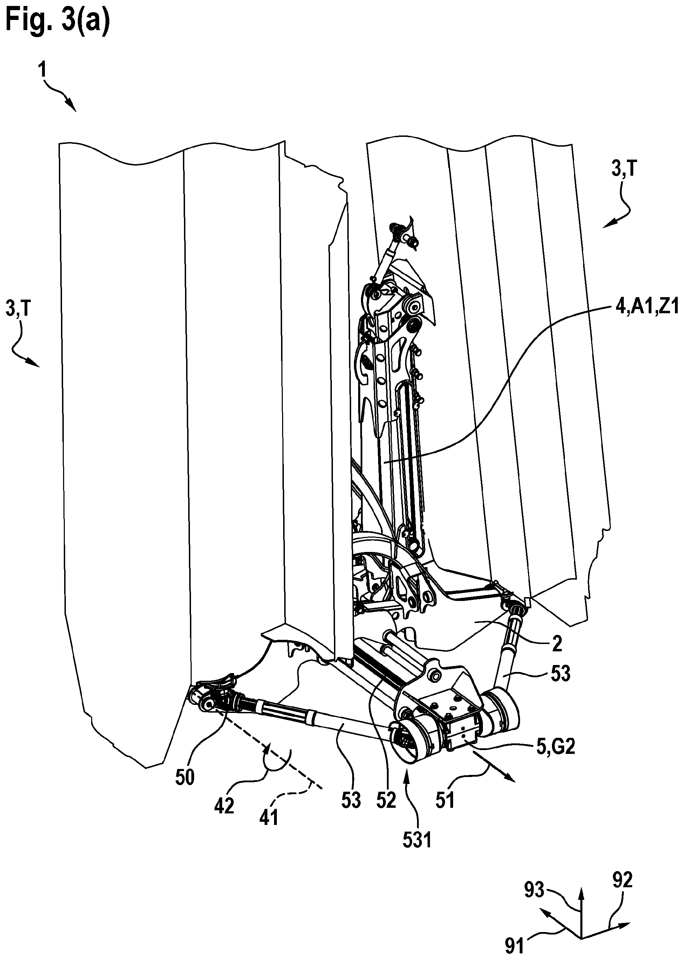

Ausgehend von dem in den Fig. 1 (a) - (c) dargestellten Arbeitsgerät 1 im Feldbetrieb zeigen die Fig. 2 (a) - (c) Verstellvorgänge zum Überführen des Arbeitsgerätes 1 in den Straßenbetrieb in einer möglichen Reihenfolge. In Fig. 3 (a) ist das Arbeitsgerät 1 im Straßenbetrieb gezeigt.

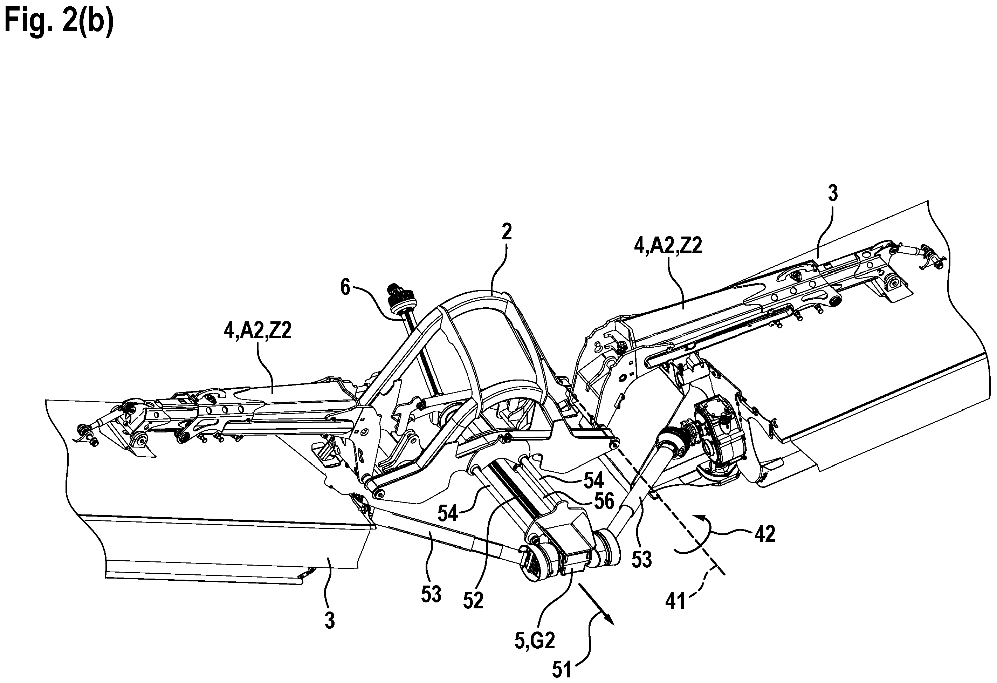

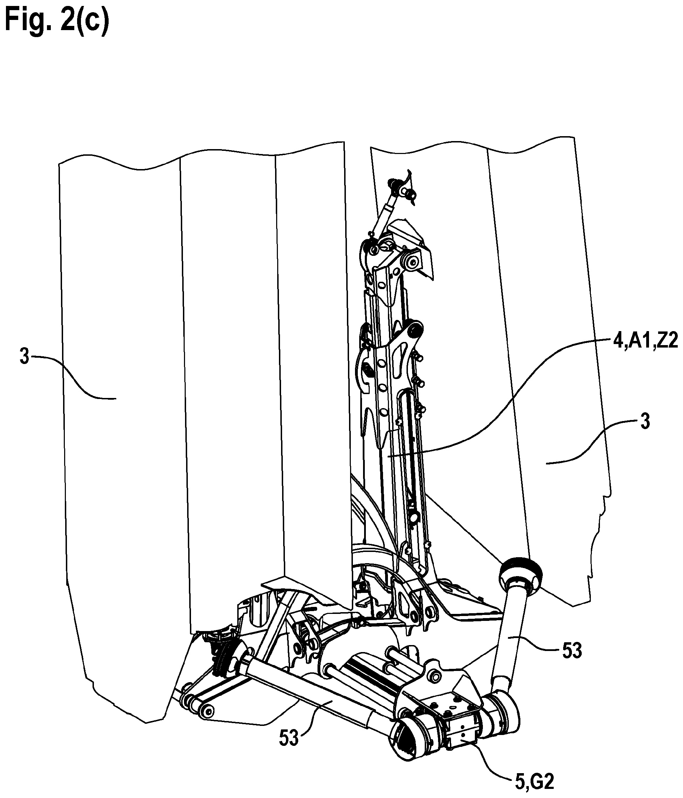

Fig. 2 zeigt das Arbeitsgerät 1 aus der Fig. 1, wobei das Aggregat 3 in eine Zwischenstellung A2, hier insbesondere eine Vorgewendestellung, angehoben ist. Die Vorgewendestellung V ermöglicht ein kontaktloses Führen des Aggregats 3 über den Boden im Vorgewende und/oder beim Einfahren in den Bestand. Dafür ist der Tragarm 4 gegenüber der Flachstellung A3 nach oben geschwenkt. Dadurch ist er zwischen der Flachstellung A3 und der Klappstellung A1 angeordnet. In dieser Zwischenstellung A2 wird das Getriebe 5 in den Außerbetriebsmodus geschaltet, so dass das Aggregat 3 nicht mehr angetrieben ist.

Zudem ist der Tragarm 4 hier bereits zumindest teilweise von der ausgezogenen Schiebestellung Z1 in eine Zwischenstellung Z2 eingezogen. Dadurch ist er zwischen der ausgezogenen Schiebestellung Z3 und der eingezogenen Schiebestellung Z1 positioniert. Das Arbeitsgerät 1 befindet sich dabei nach wie vor in einer im Feldbetrieb üblichen Anordnung.

Die Zwischenstellungen A2, Z2 sind hier so gewählt, dass die Ausgangswelle 53 auf eine Mindestlänge verkürzt ist. Um ein Stauchen der Ausgangswelle 53 zu vermeiden, wird das Getriebe 5 in einem nächsten Schritt in die Verschiebeposition G2 verschoben. Das Arbeitsgerät 1 mit in Verschiebeposition G2 verschobenem Getriebe 5 zeigt Fig. 2 (b).

Sichtbar ist, dass die Ausgangswellen 53 durch das Verstellen des Getriebes 5 verlängert sind. Dadurch kann auch beim weiteren Hochklappen und/oder Einschieben des Tragarms 4 ein Stauchen der Ausgangswellen 53 sicher vermieden werden.

Da das Getriebe 5 hier in der Verschiebeposition G2 angeordnet ist, ist die Reihenfolge, in der der Tragarm 4 nachfolgend verstellt wird, frei wählbar. Er kann daher ausgehend von den in Fig. 2 (b) dargestellten Zwischenstellungen A2 bei in Verschiebeposition G2 angeordnete Getriebe 5 zunächst in die aufgerichtete Klappstellung A1 hochgeklappt werden. Dies zeigt Fig. 2 (c). Abschließend erfolgt ein Einziehen des Tragarms 4 in die eingezogenen Schiebestellung Z1. Das Aggregat 3 befindet sich dann in der Transportanordnung T und das Arbeitsgerät 1 ist für den Straßenbetrieb eingerichtet. Dies zeigt Fig. 3 (a).

Alternativ kann der Tragarm 4 ausgehend von den in Fig. 2 (b) dargestellten Zwischenstellungen A2 bei in Verschiebeposition G2 angeordnete Getriebe 5 aber auch zunächst in die eingezogene Schiebestellung Z1 eingezogen werden, um abschließend in die aufgerichtete Klappstellung A1 hochgeklappt zu werden.

Gegenüber der hier dargestellten Reihenfolge kann das Arbeitsgerätes 1 zudem noch schneller vom Feldbetrieb in den Straßenbetrieb überführt werden, wenn das Hochklappen des Tragarms 4 und das Verschieben des Getriebes 5 wenigstens teilweise gleichzeitig erfolgt. Dafür muss eine Länge des Tragarms 4 größer als eine Grenzlänge sein, und ein Schwenkwinkel des Tragarms 4 gegenüber der Flachstellung A3 kleiner oder gleich einem Grenzwinkel.

Zum Einrichten des Straßenbetriebs kann dadurch von den Zwischenstellungen A2, Z2 ausgehend ein weiteres Verschwenken und/oder Teleskopieren des Tragarms 4, insbesondere bis das Aggregat 3 in der Transportanordnung T (siehe Fig. 2) verstellt ist, erfolgen. Dabei wird eine Beschädigung der Ausgangswelle 53 durch Knicken und/oder Stauchen vermieden.

Die Steuerungseinrichtung 8 ist dazu eingerichtet, die optimale Reihenfolge anhand der erfassten Stellungen A1 - A3, Z1 - Z3 des Tragarms 4 und der erfassten Position G1, G2 des Getriebes 5 auszuwählen und die Aktoren 56 in dieser Reihenfolge anzusteuern.

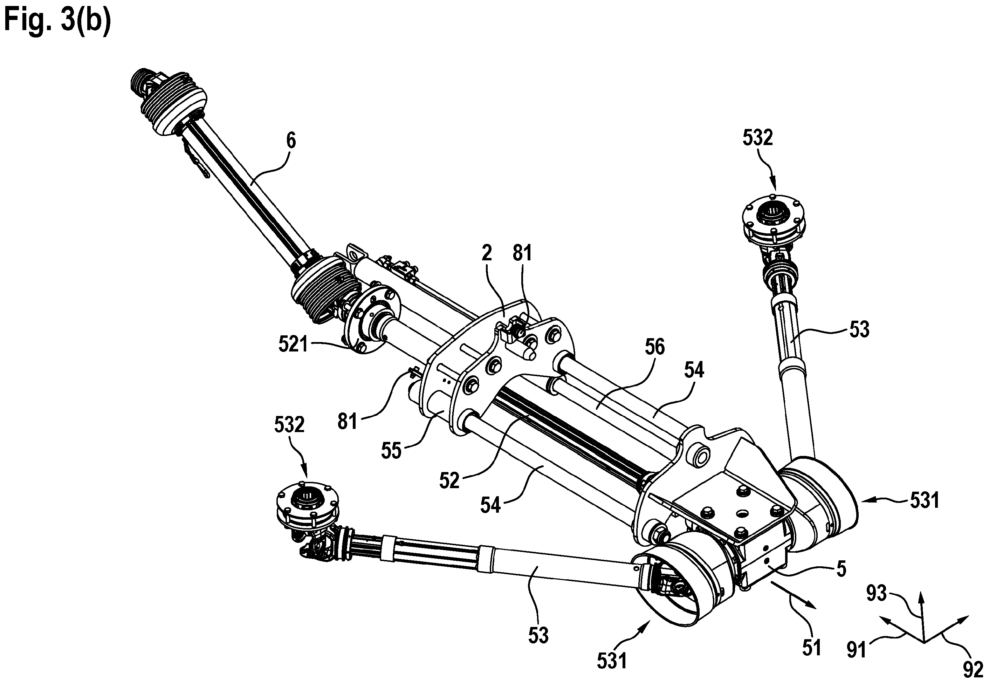

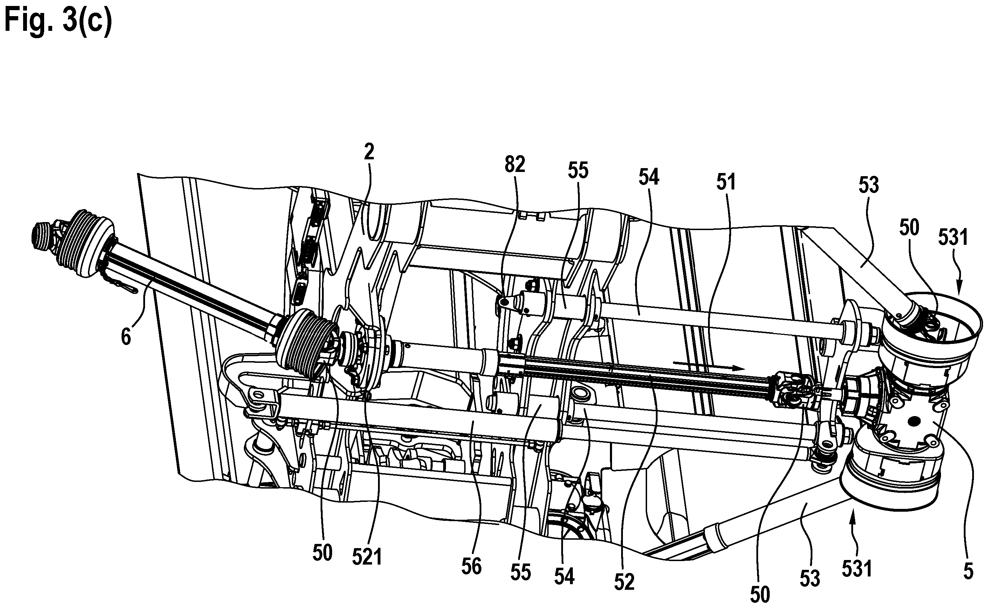

Fig. 3 (a) zeigt das für den Straßenbetrieb eingerichtete Arbeitsgerät 1. In Fig. 3 (b) ist der Antriebsstrang des für den Straßenbetrieb eingerichteten Arbeitsgerätes 1, und in Fig. 3 (c) ein Ausschnitt des für den Straßenbetrieb eingerichtete Arbeitsgerät 1 von unten dargestellt. Das Aggregat 3 ist dafür in die Transportanordnung T und das Getriebe 5 in die Verschiebeposition G2 verstellt. In der Transportanordnung T sind die Aggregate 3 aufgerichtet, so dass sie sich etwa in Hochrichtung 93 erstrecken, oder in einem (kleinen) spitzen Winkel dazu. Das Getriebe 5 ist in der Verschiebeposition G2 vom Anbaurahmen 2 beabstandet.

Durch Verschieben des Getriebes 5 in die Verschiebeposition G2 sind die Ausgangswellen 53 gegenüber ihrer Minimallänge verlängert. Dafür sind der Aktor 56 ausgefahren und die Eingangswelle 52 auf eine, insbesondere maximale, Länge teleskopiert. Dabei sind die Führungselemente 54 in den Führungslagern 55 verschoben. Dadurch können der erste Sensor 81 kein Getriebe 5, und der zweite Sensor 82 kein Führungselement 54 mehr erfassen. Anhand des Signals des zweiten Sensors 82 ermittelt die Steuerungseinrichtung 8, dass das Getriebe in die Verschiebeposition G2 verschoben ist.

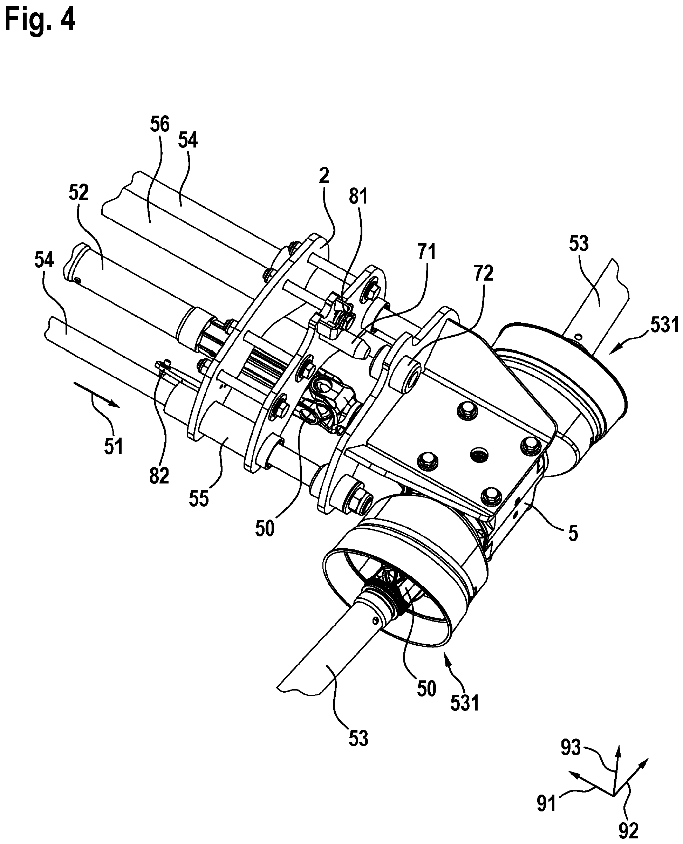

Fig. 4 zeigt einen vergrößerten Ausschnitt des Antriebsstranges der Ausführungsform der Fig. 1 (c). Dabei ist das Getriebe 5 hier in einer Position angeordnet, in der es zumindest teilweise vom Anbaurahmen 2 weg verstellt ist. Es befindet sich daher in einer Zwischenposition (nicht bezeichnet) zwischen der Grundposition G1 und der Verschiebeposition G2. Der zum Verschieben des Getriebes 5 vorgesehene Aktor 56 ist dafür zumindest teilweise ausgefahren.

Sichtbar sind die beiden am Getriebe 5 angeordneten Führungselemente 54. Sie sind in den zur Führung vorgesehenen Führungslagern 55 gegenüber dem Anbaurahmen 2 verschiebbar angeordnet, und dienen der Führung des Getriebes 5 in und/oder gegen die Verschieberichtung 51.

Um zu verhindern, dass sich das Getriebe 5 beim Drehen der Eingangswelle 52 mit dieser dreht, sind am Anbaurahmen 2 sowie am Getriebe 5 Koppelelemente 71, 72 vorgesehen. Ein erstes Koppelelement 71 ist als Stift ausgebildet, und ein zweites Koppelelement 72 als Durchgangsbohrung. In der Grundposition G1 des Getriebes durchsetzt der Stift 71 die Durchgangsbohrung 72. Dadurch kann sich das Getriebe 5 am Anbaurahmen 2 abstützen. Beim Verschieben des Getriebes 5 in die Verschiebeposition G2 wird der Stift 71 aus der Durchgangsbohrung 72 ausgezogen. Jedoch zeigt der erste Sensor 81 der Steuerungseinrichtung 8 das Entfernen des Getriebes 5 an, so dass dieses rechtzeitig von der Steuerungseinrichtung 8 in den Außerbetriebsmodus geschaltet werden kann.

## Patentansprüche

1. Landwirtschaftliches Arbeitsgerät (1), insbesondere Mähwerk, zum Anbau an ein Zugfahrzeug, umfassend
• einen Anbaurahmen (2), an dem ein teleskopierbarer Tragarm (4) verschwenkbar und/oder verschiebbar angeordnet ist,
• wenigstens ein an den Tragarm (4) angelenktes Aggregat (3),
• ein Getriebe (5), das leistungsempfangend an eine Zapfwelle des Zugfahrzeugs anschließbar ist, und
• eine längenveränderbare Ausgangswelle (53), die leistungsübertragend zwischen dem Getriebe (5) und dem Aggregat (3) angeordnet ist,
wobei das Aggregat (3) durch Verschwenken und/oder Verschieben des Tragarms (4) positionsveränderbar ist, und reversibel von einer für den Feldbetrieb vorgesehenen Feldanordnung (F), in der der Tragarm (4) in eine etwa bodenparallele Flachstellung (A3) verschwenkt ist, und reversibel von einer eingezogenen Schiebestellung (Z1) in eine ausgezogenen Schiebestellung (Z3) teleskopierbar ist, in eine für den Straßenbetrieb vorgesehene Transportanordnung (T) verstellbar ist, in der der Tragarm (4) in eine gegenüber der Flachstellung (A3) aufgerichtete Klappstellung (A1) verschwenkt ist, und in die eingezogene Schiebestellung (Z1) verschoben ist, wobei das Getriebe (5) von einer Grundposition (G1), in der es mit dem Aggregat (3) antriebsverbindbar oder antriebsverbunden ist, zum Einrichten des Straßenbetriebs in eine Verschiebeposition (G2) verstellbar ist,
**dadurch gekennzeichnet, dass**
eine Steuereinrichtung (8) vorgesehen ist, welche dazu eingerichtet ist, dass beim Überführen des Aggregates (3) von der Feldanordnung (F) in die Transportanordnung (T) das Teleskopieren und/oder Verschwenken des Tragarms (4) und das Verstellen des Getriebes (5) von der Grundposition (G1) in die Verschiebeposition (G2) in Abhängigkeit von aktuellen Stellungen (A1, A2, A3, Z1, Z2, Z3) des Tragarms (4) und einer aktuellen Position (G1, G2) des Getriebes (5) in unterschiedlichen Reihenfolgen erfolgt.

2. Landwirtschaftliches Arbeitsgerät (1) nach Anspruch 1, **dadurch gekennzeichnet, dass** die Steuerungseinrichtung (8) zusätzlich dazu eingerichtet ist, das Verstellen des Tragarms (4) und des Getriebes (5) hydraulisch und/oder elektrisch zu steuern.

3. Landwirtschaftliches Arbeitsgerät (1) nach dem Oberbegriff des Patentanspruchs 1 oder nach Patentanspruch 1, **dadurch gekennzeichnet, dass** die Steuerungseinrichtung (8)
Messmittel (81, 82) umfasst, die dazu eingerichtet sind, die aktuelle Stellung (A1, A2, A3, Z1, Z2, Z3) des Tragarms (4) und die aktuelle Position (G1, G2) des Getriebes (5) zu erfassen.

4. Landwirtschaftliches Arbeitsgerät (1) nach einem der vorherigen Ansprüche, **dadurch gekennzeichnet, dass** der Tragarm (4)
• bei überwiegend eingezogener Schiebestellung (Z1, Z2) erst dann in die aufgerichtete Klappstellung (A1) klappbar ist, und/oder
• bei überwiegend aufgerichteter Klappstellung (A1, A2) erst dann in die eingezogene Schiebestellung (Z1) einziehbar ist,
wenn das Getriebe (5) in die Verschiebeposition (G2) verschoben ist.

5. Landwirtschaftliches Arbeitsgerät (1) nach einem der vorherigen Ansprüche, **dadurch gekennzeichnet, dass** zum Einstellen des Straßenbetriebs das Teleskopieren und/oder Verschwenken des Tragarms (4) und/oder das Verstellen des Getriebes (5) zumindest teilweise nacheinander und/oder zumindest teilweise gleichzeitig erfolgt.

6. Landwirtschaftliches Arbeitsgerät (1) nach einem der vorherigen Ansprüche, **dadurch gekennzeichnet, dass** die Steuerungseinrichtung (8) dazu eingerichtet ist, zum Einstellen des Straßenbetriebs das Getriebe (5)
a. zuerst von der Grundposition (G1) in die Verschiebeposition (G2) zu verschieben, wenn eine Länge des Tragarms (4) kleiner als eine oder gleich einer Grenzlänge ist, insbesondere der Tragarm (4) in die eingezogene Schiebestellung (Z1) verschoben ist, oder
b. zuerst von der Grundposition (G1) in die Verschiebeposition (G2) zu verschieben, wenn die Länge des Tragarms (4) größer als die Grenzlänge ist und ein Schwenkwinkel des Tragarms (4) größer als ein Grenzwinkel ist, insbesondere der Tragarm (4) in die aufgerichtete Klappstellung (A1) verschwenkt ist, oder
c. von der Grundposition (G1) in die Verschiebeposition (G2) zu verschieben, während der Tragarm (4), insbesondere von der Flachstellung (A3) ausgehend, in die aufgerichtete Klappstellung (A1) verschwenkt wird, wenn die Länge des Tragarms (4) größer als die Grenzlänge ist, und der Schwenkwinkel des Tragarms (4) kleiner als die oder gleich dem Grenzwinkel ist.

7. Landwirtschaftliches Arbeitsgerät (1) nach einem der vorherigen Ansprüche, **dadurch gekennzeichnet, dass** die Steuerungseinrichtung (8) dazu eingerichtet ist, das Getriebe (5) von einem Betriebs- in einen Außerbetriebsmodus zu schalten, entweder durch manuelle Einstellung eines Fahrers, oder wenn der Tragarm (4) gegenüber der Flachstellung (A3) in eine Zwischenstellung (A3), insbesondere in eine Vorgewendestellung oder höher, geklappt ist.

8. Landwirtschaftliches Arbeitsgerät (1) nach Anspruch 7, **dadurch gekennzeichnet, dass** die Steuerungseinrichtung (8) dazu eingerichtet ist, das Einstellen des Straßenbetriebs nur im Außerbetriebsmodus durchzuführen.

9. Landwirtschaftliches Arbeitsgerät (1) nach einem der vorherigen Ansprüche, **dadurch gekennzeichnet, dass** der Anbaurahmen (2) ein Führungsmittel (54) zum reversiblen Verschieben des Getriebes (5) umfasst, das sich in Verschieberichtung (51), insbesondere in eine Fahrtrichtung (91), erstreckt.

10. Landwirtschaftliches Arbeitsgerät (1) nach einem der vorherigen Ansprüche, **dadurch gekennzeichnet, dass** es zum Teleskopieren und/oder Verschwenken des Tragarms (4) und zum Verstellen des Getriebes (5) jeweils einen Aktor (56) umfasst, wobei die Aktoren (56)
a. entweder unabhängig voneinander betätigbar, oder
b. zum gleichzeitigen Betätigen zumindest teilweise miteinander verschaltet sind.

11. Landwirtschaftliches Arbeitsgerät (1) nach einem der vorherigen Ansprüche, **dadurch gekennzeichnet, dass** es eine teleskopierbare Eingangswelle (52) umfasst, die zwischen dem Getriebe (5) und der Zapfwelle des Zugfahrzeugs angeordnet ist und mittels eines Kardangelenks (523) und/oder einer Trennkupplung mit dem Getriebe (5) verbunden ist.

12. Landwirtschaftliches Arbeitsgerät (1) nach einem der vorherigen Ansprüche, **dadurch gekennzeichnet, dass** das Arbeitsgerät (1) zwei Aggregate (3) aufweist, und dass die Steuerungseinrichtung (8) dazu eingerichtet ist, die Position (A1, A2, A3, Z1, Z2, Z3) beider Aggregate (3) simultan zu verändern.

13. Verfahren zum Einrichten eines Straßenbetriebs eines landwirtschaftlichen Arbeitsgeräts (1) nach einem der vorherigen Ansprüche, bei dem eine Position eines Aggregats (3), das über einen teleskopierbaren Tragarm (4) an das Arbeitsgerät (1) angelenkt ist, durch Verschwenken und/oder Verschieben des Tragarms (4) verändert wird, so dass das Aggregat (3) reversibel von einer für den Feldbetrieb vorgesehenen Feldanordnung (F), in der der Tragarm (4) in eine etwa bodenparallele Flachstellung (A3) verschwenkt und reversibel von einer eingezogenen Schiebestellung (Z1) in eine ausgezogenen Schiebestellung (Z3) teleskopierbar ist, in eine für den Straßenbetrieb vorgesehene Transportanordnung (T), in der der Tragarm (4) in eine gegenüber der Flachstellung (A3) aufgerichtete Klappstellung (A1) verschwenkt und in die eingezogene Schiebestellung (Z1) überführt ist, verstellt wird,
**dadurch gekennzeichnet, dass**
wobei beim Überführen des Aggregates (3) von der Feldanordnung (F) in die Transportanordnung (T) das Teleskopieren und/oder Verschwenken des Tragarms (4) und das Verschieben des Getriebes (5) von einer Grundposition (G1) in eine Verschiebeposition (G2) in Abhängigkeit von aktuellen Stellungen (A1, A2, A3, Z1, Z2, Z3) des Tragarms (4) und aktuellen Positionen (G1, G2) des Getriebes (5) in unterschiedlichen Reihenfolgen erfolgt.

14. Verfahren nach Anspruch 13 **dadurch gekennzeichnet, dass** das Arbeitsgerät eine elektrische Steuerungseinrichtung, wobei das Verfahren die Schritte umfasst:
• Verschieben des Getriebes (5) von einer Grundposition (G1), in der es mit dem Aggregat (3) antriebsverbindbar ist, in eine Verschiebeposition (G2), und
• Erfassen einer aktuellen Position (A1, A2, A3, Z1, Z2, Z3) des Aggregates (3) und einer aktuellen Position (G1, G2) des Getriebes (5),
und wobei das Verstellen des Aggregates (3) von der Feldanordnung (F) in die Transportanordnung (T), und/oder des Getriebes (5) von der Grundposition (G1) in die Verschiebeposition (G2) in Abhängigkeit von den erfassten Stellungen (A1, A2, A3, Z1, Z2, Z3) und/oder Positionen (G1, G2) durchgeführt wird.

15. Verfahren nach einem der Ansprüche 13 - 14, **dadurch gekennzeichnet, dass** der Tragarm (4)
• bei überwiegend eingezogener Schiebestellung (Z1, Z2) erst dann in die aufgerichtete Klappstellung (A1) geklappt wird, und/oder
• bei überwiegend aufgerichteter Klappstellung (A1, A2) erst dann in die eingezogene Schiebestellung (Z1) eingezogen wird,
wenn das Getriebe (5) in die Verschiebeposition (G2) verschoben ist.

## Claims

1. An agricultural implement (1), in particular a mower unit, for attachment to a towing vehicle, comprising
• an attachment frame (2) on which a telescopic support arm (4) is arranged so as to be pivotable and/or slidable,
• at least one unit (3) which is hinged to the support arm (4),
• a gearbox (5) which can be connected to a power take-off shaft of the towing vehicle in order to receive power, and
• a variable-length output shaft (53) which is arranged between the gearbox (5) and the unit (3) in order to transmit power,
wherein the unit (3) can be repositioned by pivoting and/or sliding the support arm (4) and can be reversibly moved from a field arrangement (F) intended for field operation in which the support arm (4) is pivoted into a flat position (A3) approximately parallel to the ground, and can be reversibly telescoped from a retracted sliding position (Z1) into an extended sliding position (Z3), can be moved into a transport arrangement (T) intended for road operation in which the support arm (4) is pivoted into a folding position (A1) that is upright relative to the flat position (A3) and is slid into the retracted sliding position (Z1), wherein the gearbox (5) can be moved from a basic position (G1), in which it can be or is drivingly connected to the unit (3), into a relocation position (G2) in order to set up road operation,
**characterized in that**
a control device (8) is provided which is designed such that, when the unit (3) is converted from the field arrangement (F) into the transport arrangement (T), the telescoping and/or pivoting of the support arm (4) and the movement of the gearbox (5) from the basic position (G1) into the relocation position (G2) take place in different sequences depending on current positions (A1, A2, A3, Z1, Z2, Z3) of the support arm (4) and on a current position (G1, G2) of the gearbox (5).

2. The agricultural implement (1) according to claim 1, **characterized in that** the control device (8) is additionally designed to control the movement of the support arm (4) and of the gearbox (5) hydraulically and/or electrically.

3. The agricultural implement (1) according to the preamble of claim 1 or according to claim 1, **characterized in that** the control device (8) comprises measuring means (81, 82) which are designed to detect the current position (A1, A2, A3, Z1, Z2, Z3) of the support arm (4) and the current position (G1, G2) of the gearbox (5).

4. The agricultural implement (1) according to any one of the preceding claims, **characterized in that** the support arm (4)
• when in the substantially retracted sliding position (Z1, Z2), can be folded into the upright folding position (A1), and/or
• when in the substantially upright folding position (A1, A2), can be retracted into the retracted sliding position (Z1)
only when the gearbox (5) is moved into the relocation position (G2).

5. The agricultural implement (1) according to any one of the preceding claims, **characterized in that**, in order to set up road operation, the telescoping and/or pivoting of the support arm (4) and/or the movement of the gearbox (5) takes place sequentially at least in part and/or simultaneously at least in part.

6. The agricultural implement (1) according to any one of the preceding claims, **characterized in that** the control device (8) is designed, in order to set up road operation,
a. to first move the gearbox (5) from the basic position (G1) into the relocation position (G2) if a length of the support arm (4) is less than or equal to a limit length, in particular if the support arm (4) is moved into the retracted sliding position (Z1), or
b. to first move the gearbox (5) from the basic position (G1) into the relocation position (G2) if the length of the support arm (4) is greater than the limit length and a pivoting angle of the support arm (4) is greater than a limit angle, in particular if the support arm (4) is pivoted into the upright folding position (A1), or
c. to move the gearbox (5) from the basic position (G1) into the relocation position (G2) while the support arm (4) is pivoted, particularly starting from the flat position (A3), into the upright folding position (A1) if the length of the support arm (4) is greater than the limit length and the pivoting angle of the support arm (4) is less than or equal to the limit angle.

7. The agricultural implement (1) according to any one of the preceding claims, **characterized in that** the control device (8) is designed to switch the gearbox (5) from an operating mode to an inoperative mode, either by manual adjustment by a driver, or when the support arm (4) is folded into an intermediate position (A3), particularly into a headland position or higher, relative to the flat position (A3).

8. The agricultural implement (1) according to claim 7, **characterized in that** the control device (8) is designed to carry out the setting-up of road operation only in the inoperative mode.

9. The agricultural implement (1) according to any one of the preceding claims, **characterized in that** the attachment frame (2) comprises a guide means (54) for reversibly moving the gearbox (5), which extends in the movement direction (51), particularly in a travel direction (91).

10. The agricultural implement (1) according to any one of the preceding claims, **characterized in that** it comprises in each case an actuator (56) for telescoping and/or pivoting the support arm (4) and for moving the gearbox (5), wherein the actuators (56) are
a. either independently operable or
b. at least partially interconnected for simultaneous operation.

11. The agricultural implement (1) according to any one of the preceding claims, **characterized in that** it comprises a telescopic input shaft (52) which is arranged between the gearbox (5) and the power take-off shaft of the towing vehicle and is connected to the gearbox (5) by means of a Cardan joint (523) and/or separating clutch.

12. The agricultural implement (1) according to any one of the preceding claims, **characterized in that** the implement (1) has two units (3), and **in that** the control device (8) is designed to change the position (A1, A2, A3, Z1, Z2, Z3) of both units (3) simultaneously.

13. A method for setting up road operation of an agricultural implement (1) according to any one of the preceding claims, in which a position of a unit (3) which is hinged to the implement (1) via a telescopic support arm (4) is changed by pivoting and/or sliding the support arm (4), so that the unit (3) is reversibly moved from a field arrangement (F) intended for field operation, in which the support arm (4) is pivoted into a flat position (A3) approximately parallel to the ground and is reversibly telescoped from a retracted sliding position (Z1) into an extended sliding position (Z3), into a transport arrangement (T) intended for road operation, in which the support arm (4) is pivoted into a folding position (A1) that is upright relative to the flat position (A3) and converted into the retracted sliding position (Z1),
**characterized in that**
wherein, during conversion of the unit (3) from the field arrangement (F) into the transport arrangement (T), the telescoping and/or pivoting of the support arm (4) and the movement of the gearbox (5) from a basic position (G1) into a relocation position (G2) take place in different sequences depending on current positions (A1, A2, A3, Z1, Z2, Z3) of the support arm (4) and current positions (G1, G2) of the gearbox (5).

14. The method according to claim 13, **characterized in that** the implement is an electrical control device, the method comprising the steps of:
• moving the gearbox (5) from a basic position (G1), in which it can be drivingly connected to the unit (3), into a relocation position (G2), and
• detecting a current position (A1, A2, A3, Z1, Z2, Z3) of the unit (3) and a current position (G1, G2) of the gearbox (5),
and wherein the movement of the unit (3) from the field arrangement (F) into the transport arrangement (T), and/or the movement of the gearbox (5) from the basic position (G1) into the relocation position (G2), is carried out depending on the detected positions (A1, A2, A3, Z1, Z2, Z3) and/or positions (G1, G2).

15. The method according to any one of claims 13-14, **characterized in that** the support arm (4)
• when in the substantially retracted sliding position (Z1, Z2), is folded into the upright folding position (A1), and/or
• when in the substantially upright folding position (A1, A2), is retracted into the retracted sliding position (Z1)
only when the gearbox (5) is moved into the relocation position (G2).

## Revendications

1. Outil (1) agricole, en particulier faucheuse, à monter sur un véhicule tracteur, comprenant
• un cadre (2) de montage, sur lequel un bras (4) porteur télescopique peut être monté pivotant et/ou coulissant,
• au moins un agrégat (3) articulé au bras (4) porteur,
• une transmission (5), qui peut être raccordée en recevant de la puissance à une prise de force du véhicule tracteur et
• un arbre (53) de sortie, dont la longueur peut être modifiée et qui, en transmettant la puissance, est monté entre la transmission (5) et l'agrégat (3),
dans lequel l'agrégat (3) peut être modifié en position par le pivotement et/ou le coulissement du bras (4) porteur et peut être mis en mouvement télescopique réversiblement d'un agencement (F) de champ, prévu pour le fonctionnement de champ, dans lequel le bras (4) porteur est pivoté dans une position (A3) à plat à peu près parallèle au sol, et réversiblement d'une position (Z1) de coulissement escamotée en une position (Z3) de coulissement déployée, est réglable dans un agencement (T) de transport, prévu pour le fonctionnement sur route, dans lequel le bras (4) porteur est pivoté dans une position (A1) de rabattement dressé par rapport à la position (A3) à plat, et est coulissé dans la position (Z1) de coulissement escamotée, dans lequel la transmission (5) est réglable d'une position (G1) de base, dans laquelle il peut être relié en entraînement ou est relié en entraînement à l'agrégat (3), pour l'établissement du fonctionnement sur route dans une position (G2) de coulissement,
**caractérisé en ce qu'**
il est prévu un dispositif (8) de commande, qui est agencé pour le passage de l'agrégat (3) de l'agencement (F) de champ à l'agencement (T) de transport, le mouvement télescopique et/ou le pivotement du bras (4) porteur et le déplacement de la transmission (5) de la position (G1) de base à la position (G2) de coulissement s'effectue en des séquences différentes en fonction des positions (A1, A2, A3, Z1, Z2, Z3) en cours du bras (4) porteur et d'une position (G1, G2) en cours de la transmission (5).

2. Outil (1) agricole suivant la revendication 1, **caractérisé en ce que** le dispositif (8) de commande est agencé en outre pour commander hydrauliquement et/ou électriquement le déplacement du bras (4) porteur et de la transmission (5).

3. Outil (1) agricole suivant le préambule de la revendication 1 ou suivant la revendication 1, **caractérisé en ce que** le dispositif (8) de commande comprend des moyens (81, 82) de mesure, qui sont agencés pour détecter la position (A1, A2, A3, Z1, Z2, Z3) en cours du bras (4) porteur et la position (G1, G2) en cours de la transmission (5).

4. Outil (1) agricole suivant l'une des revendications précédentes, **caractérisé en ce que** le bras (4) porteur
• dans la position (Z1, Z2) de coulissement d'une manière prépondérante escamotée, peut être rabattu alors seulement dans la position (A1) de rabattement dressée et/ou
• dans la position (A1, A2) de rabattement d'une manière prépondérante dressée, peut être escamoté alors seulement dans la position (Z1) de coulissement escamotée,
si la transmission (5) est coulissée dans la position (G2) de coulissement.

5. Outil (1) agricole suivant l'une des revendications précédentes, **caractérisé en ce que**, pour l'établissement du fonctionnement sur route, le mouvement télescopique et/ou le basculement du bras (4) porteur et/ou le déplacement de la transmission (5) s'effectue au moins en partie l'un après l'autre et/ou au moins en partie en même temps.

6. Outil (1) agricole suivant l'une des revendications précédentes, **caractérisé en ce que** le dispositif (8) de commande est agencé, pour l'établissement de la position sur route, de manière à ce que la transmission (5)
a. coulisse d'abord de la position (G1) de base à la position à la position (G2) de coulissement, si une longueur du bras (4) porteur est plus petite ou inférieure à une longueur limite, en particulier si le bras (4) porteur est coulissé dans la position (Z1) de coulissement escamoté ou
b. coulisse d'abord de la position (G1) de base à la position (G2) de coulissement, si la longueur du bras (4) porteur est plus grande que la longueur limite et si un angle de pivotement du bras (4) porteur est plus grand qu'un angle limite, notamment si le bras (4) porteur est pivoté dans la position (A1) de rabattement dressée ou
c. coulisse de la position (G1) de base à la position (G2) de coulissement pendant que le bras (4) porteur, en particulier à partir de la position (A3) à plat, est pivoté dans la position (A1) de rabattement dressée, si la longueur du bras (4) porteur est plus grande que la longueur limite et si l'angle de pivotement du bras (4) porteur est inférieur ou égal à l'angle limite.

7. Outil (1) agricole suivant l'une des revendications précédentes, **caractérisé en ce que** le dispositif (8) de commande est agencé pour faire passer la transmission (5) d'un mode de fonctionnement à un mode hors de fonctionnement, soit par réglage manuel d'un conducteur, ou si le bras (4) porteur est rabattu par rapport à la position (A3) à plat dans une position (A3) intermédiaire, en particulier dans une position de fourrière ou plus haute.

8. Outil (1) agricole suivant la revendication 7, **caractérisé en ce que** le dispositif (8) de commande est agencé pour effectuer l'établissement du fonctionnement sur route seulement dans un mode hors de fonctionnement.

9. Outil (1) agricole suivant l'une des revendications précédentes, **caractérisé en ce que** le cadre (2) de montage comprend un moyen (54) de guidage pour le coulissement réversible de la transmission (5), qui s'étend dans la direction (51) de coulissement, en particulier dans une direction (91) de circulation.

10. Outil (1) agricole suivant l'une des revendications précédentes, **caractérisé en ce qu'**il comprend, pour le mouvement télescopique et/ou le pivotement du bras (4) porteur et pour le déplacement de la transmission (5), respectivement un actionneur (56), dans lequel les actionneurs (56)
a. peuvent être actionnés indépendamment l'un de l'autre ou
b. pour l'actionnement simultané sont branchés entre eux au moins en partie.

11. Outil (1) agricole suivant l'une des revendications précédentes, **caractérisé en ce qu'**il comprend un arbre (52) d'entrée télescopique, qui est monté entre la transmission (5) et la prise de force du véhicule tracteur et qui est assemblé à la transmission (5) au moyen d'une articulation (523) à la cardan et/ou d'un accouplement à séparation.

12. Outil (1) agricole suivant l'une des revendications précédentes, **caractérisé en ce que** l'outil (1) a deux agrégats (3) et **en ce que** le dispositif (8) de commande est agencé pour modifier simultanément la position (A1, A2, A3, Z1, Z2, Z3) des deux agrégats (3).

13. Procédé d'établissement d'un fonctionnement sur route d'un outil (1) agricole suivant l'une des revendications précédentes, dans lequel on modifie, par pivotement et/ou coulissement du bras (4) porteur, une position d'un agrégat (3), qui est articulé à l'outil (1) par l'intermédiaire du bras (4) porteur pouvant être soumis à un mouvement télescopique, de manière à déplacer l'agrégat (3) de manière réversible d'un agencement (F) de champ, prévu pour le fonctionnement de champ, dans lequel le bras (4) porteur est pivoté dans une position (A3) à plat à peu près parallèle au sol et peut être déplacé par un mouvement télescopique réversiblement d'une position (Z1) de coulissement escamotée à une position (Z3) de coulissement déployée dans un agencement (T) de transport, prévu pour le fonctionnement sur route, dans lequel le bras (4) porteur est pivoté dans une position (A1) de rabattement redressée par rapport à la position (A3) à plat et est mis dans la position (Z1) de coulissement escamotée,
**caractérisé en ce que**
lors du passage de l'agrégat (3) de l'agencement (F) de champ à l'agencement (T) de transport, le mouvement télescopique et/ou le pivotement du bras (4) porteur et le déplacement de la transmission (5) d'une position (G1) de base à une position (G2) de coulissement en fonction de positions (A1, A2, A3, Z1, Z2, Z3) en cours du bras (4) porteur et de positions (G1, G2) en cours de la transmission (5) s'effectue en des séquences différentes.

14. Procédé suivant la revendication 13,
**caractérisé en ce que** l'outil a un dispositif de commande électrique, dans lequel le procédé comprend les stades :
• coulissement de la transmission (5) d'une position (G1) de base, dans laquelle elle peut être assemblée en entraînement à l'agrégat (3), à une position (G2) de coulissement et
• détection d'une position (A1, A2, A3, Z1, Z2, Z3) en cours de l'agrégat (3) et d'une position (G1, G2) en cours de la transmission (5),
et dans lequel on effectue le passage de l'agrégat (3) de l'agencement (F) de champ à l'agencement (T) de transport et/ou de la transmission (5) de la position (G1) de base à la position (G2) de coulissement en fonction des positions (A1, A2, A3, Z1, Z2, Z3) détectées et/ou des positions (G1, G2).

15. Procédé suivant l'une des revendications 13-14, **caractérisé en ce que** le bras (4) porteur
• dans la position (Z1, Z2) de coulissement d'une manière prépondérante escamotée, peut être rabattu alors seulement dans la position (A1) de rabattement dressée et/ou
• dans la position (A1, A2) de rabattement d'une manière prépondérante dressée, peut être escamoté alors seulement dans la position (Z1) de coulissement escamotée,
si la transmission (5) est coulissée dans la position (G2) de coulissement.
